(19) Europäisches Patentamt
European Patent Office
Office européen des brevets

(11) **EP 4 411 168 B1**

(12) **EUROPÄISCHE PATENTSCHRIFT**

(45) Veröffentlichungstag und Bekanntmachung des Hinweises auf die Patenterteilung:
**22.07.2026   Patentblatt 2026/30**

(21) Anmeldenummer: **23154861.1**

(22) Anmeldetag: **03.02.2023**

(51) Internationale Patentklassifikation (IPC):
*F16H 1/06* *(2006.01)*

(52) Gemeinsame Patentklassifikation (CPC):
**F16H 1/06;** F16H 55/0806

(54) **ZAHNRADGETRIEBE**

GEAR TRANSMISSION

ENGRENAGE À ROUES DENTÉES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**07.08.2024   Patentblatt 2024/32**

(73) Patentinhaber: **X-Invent GmbH**
**5020 Salzburg (AT)**

(72) Erfinder: **König, Harald**
**5020 Salzburg (AT)**

(74) Vertreter: **KLIMENT & HENHAPEL**
**Patentanwälte OG**
**Gonzagagasse 15/2**
**1010 Wien (AT)**

(56) Entgegenhaltungen:
CH-A- 362 274         CN-B- 105 134 910
DE-A1- 102018 218 888     DE-C- 970 027

**Beschreibung**

GEBIET DER ERFINDUNG

Die Erfindung betrifft ein Zahnradgetriebe, umfassend ein erstes, treibendes Zahnrad, welches um eine erste Drehachse gelagert ist, sowie ein zweites, getriebenes Zahnrad, welches um eine zweite Drehachse gelagert ist, wobei das erste, treibende Zahnrad und das zweite, getriebene Zahnrad einander kämmend gepaart sind und deren Verzahnung ineinandergreifende Umfangszähne umfasst.

STAND DER TECHNIK

Definitionsgemäß ist ein Zahnrad ein Rad mit über seinen Umfang gleichmäßig verteilten Zähnen. Eine Zahnradanordnung mit zumindest einem Zahnradpaar bzw. einer Zahnradpaarung aus einander kämmenden ersten und zweiten Zahnrädern bildet ein Zahnradgetriebe. Eine solche Zahnradanordnung ist beispielsweise bereits aus der Druckschrift DE 10 2018 218 888 A1 bekannt. Die zumindest zwei oder mehreren jeweils miteinander gepaarten Zahnräder sind um zumindest zwei voneinander beabstandete Drehachsen jeweils so drehbar gelagert angeordnet, dass deren Zähne einander kämmen, also ineinandergreifen. Ein solches Zahnradgetriebe wird vorwiegend zur Übertragung eines Antriebsmoments bzw. Drehmoments zwischen zwei jeweils um Drehachsen drehbar gelagerten, gepaarten Zahnrädern gebraucht, deren Zähne miteinander in Eingriff stehen.

Im Betrieb eines solchen Zahnradgetriebes bzw. einer solchen Zahnradanordnung kann dabei ein Antriebsmoment bzw. Drehmoment von einem ersten, treibenden Zahnrad auf das damit gepaarte zweite Zahnrad übertragen werden, wobei das zweite Zahnrad auch als getriebenes Zahnrad bezeichnet wird. Im Folgenden sind die Bezeichnungen eines Zahnradpaars mit einem ersten und zweiten Zahnrad so gewählt, dass im Betriebszustand des Zahnradgetriebes das erste Zahnrad auch als treibendes Zahnrad und das zweite Zahnrad auch als getriebenes Zahnrad bezeichnet werden.

Zahnradgetriebe haben den Vorteil, dass sie formschlüssig und somit schlupffrei sind. Soll das Übersetzungsverhältnis eines solchen Zahnradgetriebes vom Eingriff des vorherigen bis zum Eingriff des nachfolgenden Zahns in die Lücken des jeweiligen Gegenrades konstant sein, so ist zu beachten, dass die Zahnflanken so geformt sind, dass sie während des Zahneingriffs das Drehmoment gleichmäßig übertragen, und dass zu jedem Zeitpunkt der Drehübertragung sich mindestens ein Zahnpaar im Eingriff befindet. Der Formschluss geht nicht verloren, wenn dafür gesorgt wird, dass der nachfolgende Zahn bereits im Eingriff ist, bevor der Eingriff des vorangehenden Zahns abbricht.

Die Zahnrad-Geometrie wird durch unterschiedliche Zahnradparameter bestimmt, etwa die Anzahl der Zähne, der Zahndicken und Lücken mit Bezug auf den Durchmesser der einander kämmenden Zahnräder. Der Quotient dieser Größen gibt als Konstante die Größe der Zähne und Lücken von Zahnrädern vor, sodass ausschließlich Zahnräder mit gleichem Modul miteinander gepaart werden können. Der Modul wird auch als Durchmesserteilung bezeichnet und gibt die Größe der Zähne des Zahnrads an.

Die Topologie der Zahnflanken eines ersten Zahnrads, die stets auch die Topologie der Zahnflanken eines zum ersten Zahnrad komplementären zweiten Zahnrads bzw. Gegenrads definieren, kann mathematisch und/oder geometrisch komplex sein. Daher wurden für die industrielle Praxis Zahnrad-Geometrien und Normen angestrebt, die rationell herstellbar sowie auch geometrisch einfach beschreibbar sind.

Dies trifft vor allem für die weitverbreitete Evolventenverzahnung zu, die außer industriellen Vorteilen technisch den Vorzug hat, dass Richtung und Größe der Zahnnormalkraft während des gesamten Zahneingriffs konstant bleiben, und dass ausreichende Toleranz gegenüber Achsabstandsabweichungen besteht, wie sie beispielsweise durch thermische Expansion beim Betrieb von Zahnradgetrieben auftreten können.

Nachteilig an solchen Zahnradgetrieben beispielsweise mit einer herkömmlichen Evolventenverzahnung ist, dass die in Eingriff stehenden Zahnräder insbesondere bei häufigem Drehrichtungswechsel und/oder bei häufigem Lastwechsel zwischen bremsender und treibender Momentübertragung in hohem Maße mechanisch belastet werden, was sich durch entsprechend störende Geräuschentwicklung sowie durch erhöhten Verschleiß infolge von Abrieb bzw. Abrasion der Verzahnungen bemerkbar macht. Für derartige Anwendungen, wie sie beispielsweise bei Fahrzeuggetrieben auftreten, kommen daher üblicherweise Stahlzahnräder zum Einsatz.

Zahnradgetriebe mit herkömmlicher Evolventenverzahnung können allerdings auch noch weitere technische Nachteile mit sich bringen. Aufgrund der meist ungünstigen Pressungsverhältnisse kann es bei den überwiegend zum Einsatz kommenden Außenverzahnungspaarungen herkömmlicher Evolventenverzahnungen zu erhöhtem Verschleiß infolge unzureichender Schmierung kommen: Die beiden einander kämmenden Zahnflanken sind konvex gekrümmt, sodass sich zwangsläufig eine sehr kleine Kontaktfläche mit erhöhter Reibung und Abrasion ergibt, wobei es besonders bei kleinen Krümmungsradien auch zu Beschädigungen durch Unterbrechung des Schmierfilms im Bereich der schiebenden Gleitreibung beim Zahnflankeneingriff kommen kann.

Für Anwendungen mit hohen und wechselnden Traglasten, wie sie beispielsweise bei Automobilgetrieben sowie beim Antrieb von Windkraftgeneratoren auftreten, kommen daher Evolventenverzahnungen nur als flüssigkeitsgeschmierte Zahnradgetriebe mit Zahnrädern aus gehärtetem Stahl zum Einsatz. Bei den meisten Auslegungen dieser Bauart ist die Reibung zwischen den Zahnflanken trotz Schmierung jedoch immer noch so hoch, dass das Getriebeöl auch zur Abfuhr von Reibungswärme dient und daher gekühlt werden muss - mit entsprechend negativen Folgen für den Gesamtwirkungsgrad. Die komplexe Montage in flüssigkeitsdichten Getriebegehäusen mit erheblichem Baugewicht, sowie der Wartungsaufwand im Dauerbetrieb einschließlich damit einhergehender Umweltbelastung beim Wechsel von Getriebeöl sind aktuell immer deutlicher hervortretende Nachteile dieser gängigen Anwendung der Evolventenverzahnung.

Weiters sind aus dem Stand der Technik bereits Zahnradgetriebe mit duroplastischen Zahnrädern bekannt, die zumindest teilweise aus Hartgewebe, Kunststoffpartikeln und/oder Faserverstärktem Kunststoff, beispielsweise aus mit Glasfasern verstärktem Kunststoff (GFK) oder Kohlenstofffaserverstärktem Kunststoff (CFK), hergestellt sind. Vorteilhaft sind Getriebe mit Zahnrädern aus derartigen Kunststoffen deutlich leichter als Getriebe mit herkömmlichen Zahnrädern aus Stahl. Außerdem sind Zahnräder aus Faserverstärktem Kunststoff druckfester als Zahnräder aus Thermoplast-Kunststoff, weisen jedoch ähnlich günstige Gleitreibungswerte wie Verzahnungen mit thermoplastischen Zahnrädern sowie ebenfalls gute Notlaufeigenschaften auf. Nachteilig an solchen Zahnradgetrieben mit Zahnrädern aus Faserverstärktem Kunststoff ist jedoch, dass deren Verschleißfestigkeit insbesondere bei hoher stoßender bzw. mechanischer Belastung beispielsweise aufgrund von häufigem Drehrichtungswechsel und/oder häufigem Lastwechsel deutlich geringer ist im Vergleich zum Einsatz von herkömmlichen Stahlzahnrädern. Insbesondere der stoßende Zahneingriff zu Beginn des Abwälzvorgangs bei geradeverzahnten Evolventenverzahnungen kann zu einer raschen Abrasion solcher aus Faserverstärkten Kunststoffwerkstoffen hergestellten Zahnrädern führen. Folglich werden derartige Zahnradgetriebe mit Zahnrädern aus Faserverstärktem Kunststoff bei herkömmlichen Getrieben im Fahrzeugbau nicht eingesetzt.

Auch bei modernen Getrieben von Elektrofahrzeugen, die aufgrund ihrer Funktion als Rekuperationsbremse bei Lastwechsel sowie der hohen Antriebs-Drehmomente der Elektromotoren besonders großen mechanisch-stoßenden Belastungen im Fahrbetrieb ausgesetzt sind, haben sich aus den vorstehend genannten Gründen Getriebe mit Zahnrädern aus Faserverstärktem Kunststoff bisher nicht durchgesetzt.

Außerdem ist aus der DE 970 027 C ein Schabrad bekannt, welches zur Erzeugung von Reibung mit dem Ziel einer Schabwirkung bei der Fertigung von Zahnflanken einer Evolventenverzahnung dient. Weiters ist aus der CN 105 134 910 B ein gleichlaufendes Evolventen-Zahnradpaar, das ineinandergreift, bekannt. Die CH 362 274 A betrifft ein Stirnzahnräderpaar mit Evolventenverzahnung.

AUFGABE DER ERFINDUNG

Es ist daher Aufgabe der Erfindung, ein Zahnradgetriebe bereitzustellen, das möglichst verschleißarm im Betrieb ist, auch ohne Schrägverzahnung bei hohen Lasten einen reibungsarmen und möglichst geräuscharmen, leisen Zahneingriff sicherstellt, und das in sämtlichen Betriebszuständen eines solchen Getriebes, also in beiden Drehrichtungen und/oder bei Lastwechsel sowohl im treibenden als auch im bremsenden Betrieb gleichermaßen geeignet ist, hohe Antriebs-Drehmomente bzw. Bremsmomente zu übertragen.

Eine weitere Aufgabe der Erfindung ist es, ein möglichst leicht bauendes und dennoch robustes Zahnradgetriebe mit hoher Verschleißfestigkeit anzugeben, welches im laufenden Betrieb möglichst wartungsarm ist.

DARSTELLUNG DER ERFINDUNG

Diese Aufgaben werden bei einem eingangs genannten, gattungsgemäßen Zahnradgetriebe mit den kennzeichnenden Merkmalen von Anspruch 1 gelöst. Weitere vorteilhafte Ausführungsformen der Erfindung sind in den abhängigen Ansprüchen sowie der Beschreibung dargelegt.

Erfindungsgemäß ist ein Zahnradgetriebe, welches ein erstes, treibendes Zahnrad, das um eine erste Drehachse gelagert ist, sowie ein zweites, getriebenes Zahnrad, das um eine zweite Drehachse gelagert ist, umfasst, wobei das erste, treibende Zahnrad und das zweite, getriebene Zahnrad einander kämmend gepaart sind und deren Verzahnung ineinandergreifende Umfangszähne umfasst, wobei der abwälzende Eingriff der beiden ineinandergreifenden Zahnräder entlang einer Eingriffsgeraden erfolgt, wobei

- das erste, treibende Zahnrad als Kopfrad mit Umfangszähnen ausgeführt ist, deren Zahnhöhe einem einfachen Modul ihrer Zahnkopfflanken samt einem Kopfspiel entspricht, wobei das Kopfspiel ein Spaltmaß des Abstands zu dem mit dem ersten, treibenden Zahnrad gepaarten, zweiten, getriebenen Zahnrads ist, und
- das zweite, getriebene Zahnrad als Fußrad mit Umfangszähnen ausgeführt ist, deren Zahnhöhe einem einfachen Modul ihrer Zahnfußflanken samt einem Kopfspiel entspricht, wobei das Kopfspiel ein Spaltmaß des Abstands zu dem mit dem zweiten, getriebenen Zahnrad gepaarten, ersten, treibenden Zahnrads ist, und wobei
- ein erster Zahneingriff der Zahnkopfflanken der Umfangszähne des ersten, treibenden Zahnrads mit den Zahnfußflanken der Umfangszähne des damit gepaarten zweiten, getriebenen Zahnrads beim Abwälzen entlang der Eingriffsgeraden frühestens in einem Wälzpunkt erfolgt, sodass

- das Zahnradgetriebe im Betrieb eine Zugverzahnung mit ausschließlich ziehender Gleitreibung ausbildet.

Erfindungsgemäß beginnt die Eingriffsstrecke der paarweise ineinandergreifenden, kämmenden Zahnräder frühestens im Wälzpunkt C, um einen möglichst schonenden, verschleißarmen Zahneingriff der miteinander gepaarten Zahnräder zu erzielen. Die Zugverzahnung mit ausschließlich ziehender Gleitreibung ist eine auf der Evolventenverzahnung basierende Verzahnung, deren Kinematik im Betrieb des Zahnradgetriebes dadurch gekennzeichnet ist, dass die Momentübertragung ausschließlich mit ziehender Gleitreibung erfolgt. Der Zahneingriff entlang der Eingriffsgeraden ermöglicht eine gleichmäßige Momentübertragung. Vorteilhaft entfällt beim erfindungsgemäßen Zahnradgetriebe die bei der herkömmlichen Evolventenverzahnung zu Beginn des Zahneingriffs zwangsläufig zu überwindende Phase stoßender Gleitreibung vollständig.

Das erste, treibende Zahnrad ist erfindungsgemäß als Kopfrad $Z_a$ mit Umfangszähnen ausgeführt, deren Zahnhöhe $h_a$ im Vergleich zur üblichen Höhe von Zähnen einer Evolventenverzahnung deutlich reduziert sind. Bei der Evolventenverzahnung beträgt die Normzahnhöhe $h = 2m + c$, also die zweifache Höhe des Modul m samt der Höhe des Kopfspiels c als Spaltabstand zum jeweiligen Gegenrad.

Noch genauer ist das Kopfspiel c jeweils der Abstand des Kopfkreises eines Zahnrads vom Fußkreis des jeweiligen Gegenrads. Beim erfindungsgemäßen Kopfrad $Z_a$ ist die Zahnhöhe $h_a = m + c_b$ entsprechend der Höhe m seiner Zahnkopfflanken samt dem Kopfspiel $c_b$ des mit dem ersten, treibenden Zahnrad gepaarten, zweiten, getriebenen Zahnrads. Das Kopfspiel $c_b$ entspricht dabei dem Abstand des Kopfkreises des zweiten, getriebenen Zahnrads bzw. Fußrads $Z_b$ vom Fußkreis des ersten, angetriebenen Zahnrads Kopfrads $Z_a$. Der bei einer Evolventenverzahnung übliche Anteil der Fußhöhe, also der Höhe der Zahnfußflanken des jeweiligen Zahnfußes, der üblicherweise dem Modul m entspricht, fehlt im Unterschied dazu hier beim erfindungsgemäßen ersten, treibenden Zahnrad bzw. Kopfrad $Z_a$. Die Zahnhöhe $h_a$ des Kopfrads $Z_a$ ist somit um den Modul m geringer als die vergleichbare Normzahnhöhe h einer Evolventenverzahnung.

Ebenso ist das zweite, getriebene Zahnrad erfindungsgemäß als Fußrad $Z_b$ mit Umfangszähnen ausgeführt, deren Zahnhöhe $h_b$ der Höhe m ihrer Zahnfußflanken samt dem Kopfspiel $c_a$ des mit dem zweiten, getriebenen Zahnrad gepaarten, ersten, treibenden Zahnrads entspricht. Das Kopfspiel $c_a$ entspricht dabei dem Abstand des Kopfkreises des ersten, treibenden Zahnrads bzw. Kopfrads $Z_a$ vom Fußkreis des zweiten, getriebenen Zahnrads bzw. Fußrads $Z_b$.

Beim erfindungsgemäßen Fußrad $Z_b$ ist die Zahnhöhe $h_b = m + c_a$. Der bei einer Evolventenverzahnung übliche Anteil der Kopfhöhe, also der Höhe der Zahnkopfflanken des jeweiligen Zahnkopfes, der üblicherweise dem Modul m entspricht, fehlt im Unterschied dazu hier beim erfindungsgemäßen zweiten, getriebenen Zahnrad bzw. Fußrad $Z_b$. Auch die Zahnhöhe $h_b$ des Fußrads $Z_b$ ist somit um den Modul m geringer als die vergleichbare Normzahnhöhe h einer Evolventenverzahnung.

Wie eingangs erwähnt erfolgt eine unerwünschte Unterbrechung eines Schmierfilms bei herkömmlichen Evolventenverzahnungen üblicherweise zu Beginn des Abwälzvorgangs zwischen dem Eingriffspunkt und dem Wälzpunkt C aufgrund von stoßendem Zahneingriff. Der Reibungswiderstand wird in diesem Abschnitt der Eingriffsstrecke bei einem Evolventengetriebe nachteilig erhöht. Für die Eingriffsstrecke mit ziehender Gleitreibung zwischen dem Wälzpunkt C und dem Eingriffsende zieht die Flanke des treibenden Zahnrads einen Ölfilm in den verengenden Schmierspalt zwischen den einander kämmenden Zahnrädern hinein.

Beim erfindungsgemäßen Zahnradgetriebe mit Zugverzahnung mit ausschließlich ziehender Gleitreibung ist im Falle einer Ölschmierung somit eine ausreichende Schmierung der einander kämmenden Zahnräder gewährleistet. Aufgrund des Wegfalls von stoßendem Zahneingriff im Betrieb des erfindungsgemäßen Zahnradgetriebes besteht deshalb auch keine Gefahr, dass gegebenenfalls ein Schmierfilm unterbrochen und somit der Reibungswiderstand nachteilig erhöht wird.

Besonders zweckmäßig kann es sein, wenn bei einem erfindungsgemäßen Zahnradgetriebe ein erster Zahneingriff der Zahnkopfflanken des ersten, treibenden Zahnrads mit den Zahnfußflanken des damit gepaarten zweiten, getriebenen Zahnrads unmittelbar nach dem Wälzpunkt C erfolgt.

Ein erster Zahneingriff erfolgt vorzugsweise so unmittelbar direkt an den Wälzpunkt C anschließend, wie dies bei Berücksichtigung der Fertigungstoleranzen möglich ist. Dadurch wird das Drehmoment M beim Zahneingriff vom treibenden, ersten Zahnrad auf das getriebene, zweite Zahnrad zunächst nahezu reibungslos abwälzend und in weiterer Folge mit zunehmend ziehender Gleitreibung simultan abwälzend bis zum Eingriffsende E auf das getriebene, zweite Zahnrad übertragen. Die verfügbare Eingriffsstrecke mit ziehender Gleitreibung zwischen dem Wälzpunkt C und dem Eingriffsende E wird damit möglichst vollständig ausgenutzt, um die im Vergleich zu einer Evolventenverzahnung verkürzte Eingriffsstrecke zumindest teilweise kompensieren zu können.

In einer weiteren, besonders vorteilhaften Ausführung der Erfindung können die Umfangszähne des ersten, treibenden Zahnrads in Richtung seiner Drehachse gesehen und/oder die Umfangszähne des zweiten, getriebenen Zahnrads in Richtung seiner Drehachse gesehen symmetrisch geformt sein.

Mit symmetrisch geformten Umfangszähnen, die in axialer Richtung des ersten, treibenden Zahnrads bzw. Kopfrads gesehen symmetrisch gestaltete Zahnflanken aufweisen, wobei eine Links-Flanke eines Umfangszahns spiegelsymmetrisch um die Mittenebene durch die Drehachse in Bezug zu einer Rechts-Flanke desselben Umfangszahns ist, kann mit dem Zahnradgetriebe vorteilhaft eine flexible Drehmomentübertragung sowohl bei Lastwechsel, als auch bei Drehrichtungswechsel erfolgen.

Um mit dem erfindungsgemäßen Zahnradgetriebe eine möglichst flexible Drehmomentübertragung sowohl bei Lastwechsel, als auch bei Drehrichtungswechsel zu ermöglichen, können alternativ zum ersten, treibenden Zahnrad oder in Ergänzung dazu ebenso die Umfangszähne des zumindest einen zweiten, getriebenen Zahnrads bzw. Fußrads in Richtung seiner Drehachse gesehen symmetrisch geformt sein.

In dieser vorteilhaften Ausführung der Erfindung können also in einer oder in beiden Drehrichtungen Antriebsmomente und/oder Gegenmomente wie beispielsweise Bremsmomente im Falle einer Rekuperation übertragen werden.

Um einen besonders schonenden Zahneingriff beim Abwälzen der miteinander verzahnten Zahnräder zu ermöglichen, kann in einer weiteren vorteilhaften Ausführung der Erfindung das erste, treibende Zahnrad als Kopfrad $Z_a$ so gestaltet sein, dass die für die Formgebung der Zahnkopfflanken maßgeblichen Kreisevolventen entsprechend einer Involutfunktion der Evolventenverzahnung auf dem Grundkreis des ersten, treibenden Zahnrads angeordnet sind, wobei der Mittelpunkt des Grundkreises im Zentrum der Drehachse des ersten, treibenden Zahnrads liegt und dessen Grundkreisradius bemessen ist als Differenz des Kopfkreisradius und des zweifachen Moduls gemäß der Gleichung:

$$r_{ga} = r_{aa} - 2m \ .$$

Die herkömmliche Evolventenverzahnung wird durch die Form ihrer Zahnflanken mit den auf den Grundkreisen errichteten Kreisevolventen gemäß der sogenannten Involut-Funktion:

$$\mathrm{inv}\ \alpha = \tan(\alpha) - \alpha$$

mit einem Eingriffswinkel $\alpha$ definiert. Dieselbe Involut-Funktion mit demselben Eingriffswinkel $\alpha$ gilt auch im vorliegenden Fall des erfindungsgemäßen Zahnradgetriebes mit Zugverzahnung. Vorteilhaft bewegen sich die Kontaktlinien bzw. Kontaktflächen der Zahnräder dabei mit gleicher Winkelgeschwindigkeit in gleicher Richtung.

Um ein erfindungsgemäßes Zahnradgetriebe rasch und kostengünstig mit bestehenden Werkzeugen herstellen zu können, kann es vorteilhaft sein, wenn das erste, treibende Zahnrad als Kopfrad gestaltet ist, wobei dessen Zahnflankenform dem oberhalb des Teilkreises liegenden Kopfteil eines Nullzahnrads ohne Profilverschiebung der Evolventenverzahnung entspricht. Ein Kopfrad des erfindungsgemäßen Zahnradgetriebes mit Zugverzahnung kann somit mit üblichen Werkzeugen zur Fertigung von Evolventenverzahnungen hergestellt werden und vergleichsweise spitzer zulaufende Zähne mit stärker geneigten Kopfradflanken aufweisen als das komplementäre Fußrad.

Um einen möglichst schonenden Zahneingriff zu ermöglichen, kann bei einem Zahnradgetriebe gemäß der Erfindung das zweite, getriebene Zahnrad als Fußrad $Z_b$ so gestaltet sein, dass die für die Formgebung der Zahnfußflanken maßgeblichen Kreisevolventen entsprechend der Involutfunktion der Evolventenverzahnung bis zum Teilkreis mit dem Teilkreisradius des zweiten, getriebenen Zahnrads angeordnet sind, von wo aus die Kreisevolventen in Zahnkopfrundungen des Kopfkreises mit einem Kopfkreisradius $r_{ab}$ des zweiten, getriebenen Zahnrads einmünden. Vorteilhaft bewegen sich die Kontaktlinien bzw. Kontaktflächen der Zahnräder dabei mit gleicher Winkelgeschwindigkeit in gleicher Richtung.

Besonders vorteilhaft kann es sein, wenn beim erfindungsgemäßen Zahnradgetriebe das zweite, getriebene Zahnrad einen Teilkreis mit einem Teilkreisradius aufweist, der seinem Kopfkreis mit dem Kopfkreisradius $r_{ab}$ entspricht.

Um ein erfindungsgemäßes Zahnradgetriebe rasch und kostengünstig herstellen zu können, kann es außerdem vorteilhaft sein, wenn das zweite, getriebene Zahnrad als Fußrad gestaltet ist, wobei dessen Zahnflankenform dem unterhalb des Teilkreises liegenden Fußteil eines Nullzahnrads ohne Profilverschiebung der Evolventenverzahnung entspricht.

Ein Fußrad des erfindungsgemäßen Zahnradgetriebes mit Zugverzahnung kann somit mit üblichen Werkzeugen zur Fertigung von Evolventenverzahnungen hergestellt werden und dabei vergleichsweise stumpfer zulaufende Zähne aufweisen als das komplementäre Kopfrad mit vergleichsweise spitzeren Zähnen.

In einer weiteren vorteilhaften Ausführung der Erfindung kann bei einem erfindungsgemäßen Zahnradgetriebe eine Zahndicke des ersten, treibenden Zahnrads an seinem Teilkreis kleiner sein als eine vergleichbare Zahndicke eines treibenden Zahnrads bei einer Evolventenverzahnung und/oder eine Zahndicke des zweiten, getriebenen Zahnrads an seinem Grundkreis kleiner sein als eine vergleichbare Zahndicke eines treibenden Zahnrads bei einer Evolventenverzahnung.

Im gegenständlichen Fall ist für den Vergleich der Zahndicken die Zahnfußfestigkeit des erfindungsgemäßen Zahnradgetriebes von besonderem Interesse. Da beim erfindungsgemäßen Kopfrad der Fußbereich fehlt, werden vereinbarungsgemäß beim erfindungsgemäßen Zahnradgetriebe daher die Zahndicken des ersten, treibenden Zahnrads bzw. des Kopfrads an seinem Teilkreis mit dem Teilkreisradius gemessen. im Vergleich zu einem herkömmlichen Zahnrad mit Evolventenverzahnung, bei dem die Zahndicke an dessen Grundkreis zur Beurteilung der Zahnfußfestigkeit herangezogen wird, werden also die Zahndicke des erfindungsgemäßen Kopfrads, gemessen an seinem Teilkreis, mit jener Zahndicke eines herkömmlichen Evolventenzahnrads, gemessen an dessen Grundkreis, miteinander verglichen.

Im Falle des zweiten, getriebenen Zahnrads bzw. Fußrads erfolgt der Vergleich der Zahndicken des erfindungsgemäßen Fußrads mit einem herkömmlichen Zahnrad einer Evolventenverzahnung am jeweiligen Grundkreis des betreffenden Zahnrads, da im gegenständlichen Fall wie gesagt die Zahnfußfestigkeit des erfindungsgemäßen Zahnradgetriebes von besonderem Interesse ist.

Die Reduktion der Zahndicken im Falle des erfindungsgemäßen Zahnradgetriebes bietet den Vorteil, dass damit der erforderliche Profilüberdeckungsgrad $\varepsilon_\alpha$ = l/p so eingestellt werden kann, dass dieser für die Erfordernisse der industriellen Praxis geeignet ist. Aufgrund der durch die verringerten Zahnhöhen sowie verringerten Zahndicken der Zähne deutlich verkürzten Biegehebel, deren Hebellänge im Vergleich zu einer herkömmlichen Evolventenverzahnung beinahe halbiert ist, kann die erforderliche Profilüberdeckung beim erfindungsgemäßen Zahnradgetriebe aufgrund größerer Krümmungsradien der Zahnflanken ohne Erhöhung der Hertz'schen Pressung erfolgen. Der Modul kann verkleinert werden, ohne dazu die Krümmung der Zahnflanken zu vergrößern.

Vorteilhaft kann somit im Vergleich zur herkömmlichen Evolventenverzahnung mit dem erfindungsgemäßen Zahnradgetriebe eine vergleichbar hohe Zahnfußfestigkeit der Zähne gewährleistet werden, ohne die Notwendigkeit, den Verlust der momentübertragenden Eingriffsstrecke mit stoßender Reibung zwischen dem Eingriffspunkt A und dem Wälzpunkt C durch mehr Bauraum in axialer Richtung kompensieren zu müssen. Das erfindungsgemäße Zahnradgetriebe kann mit einem vergleichbaren Achsabstand wie bei einer herkömmlichen Evolventenverzahnung gebaut werden, um mit den Traglasten herkömmlicher Evolventenverzahnungen vergleichbare Traglasten erzielen zu können.

Aus fertigungstechnischer Sicht vorteilhaft kann ein erfindungsgemäßes Zahnradgetriebe ausgeführt sein, bei dem das erste, treibende Zahnrad sowie das zweite, getriebene Zahnrad jeweils eine Geradverzahnung aufweisen. Zahnradgetriebe mit Zahnrädern mit Geradverzahnungen bieten überdies den Vorteil, dass keine Axialkräfte auf die Zahnräder wirken und die Geradverzahnungen abriebminimierend sind, weshalb ein erfindungsgemäßes Zahnradgetriebe in dieser Ausführung besonders wartungsarm ist und im Dauerbetrieb eingesetzt werden kann. Um die Traglasten und die Profilüberdeckung zu erhöhen, können auch mehrere Zahnradpaarungen jeweils mit Geradverzahnung in axialer Richtung parallel mit einem Drehwinkelversatz gestaffelt nebeneinander angeordnet sein, wodurch im Betrieb des Zahnradgetriebes die Momente gleichmäßiger übertragen werden und weniger störende Geräusche auftreten.

In einer alternativen Ausführung kann ein Zahnradgetriebe gemäß der Erfindung gestaltet sein, bei dem das erste, treibende Zahnrad sowie das zweite, getriebene Zahnrad jeweils eine Schrägverzahnung aufweisen. In dieser Ausführungsvariante können Eingriffsstreckenverluste im Vergleich zu einer herkömmlichen Evolventenverzahnung durch die gewählte Schrägverzahnung zumindest teilweise kompensiert werden.

Um ein möglichst leichtes Zahnradgetriebe bereitstellen zu können, das aufgrund seiner geringen Masse besonders flexibel einsetzbar ist, kann es von Vorteil sein, wenn das erste, treibende Zahnrad sowie das zweite, getriebene Zahnrad aus einem faserverstärkten Werkstoff, vorzugsweise aus einem Glasfaserverstärkten Kunststoff (GFK), besonders bevorzugt aus einem Kohlenstofffaserverstärktem Kunststoff (CFK), hergestellt sind.

Wie eingangs bereits erwähnt, bieten faserverstärkte Werkstoffe überdies den Vorteil, korrosionsfest, besonders verschleißarm, möglichst wartungsfrei sowie robust im Dauerbetrieb mit wechselnder Belastung zu sein. Überdies sind faserverstärkte Werkstoffe bzw. faserverstärkte Kunststoffe meist formstabiler als Duroplast-Kunststoffe ohne Faserverstärkung, die sich bei hohen Traglasten plastisch verformen. Da beim erfindungsgemäßen Zahnradgetriebe im Betrieb eine Zugverzahnung mit ausschließlich ziehender Gleitreibung ausgebildet ist, wird besonders vorteilhaft der stoßende Zahneingriff zu Beginn des Abwälzvorgangs bei geradeverzahnten Evolventenverzahnungen, der üblicherweise zu einer raschen Abrasion solcher aus Faserverstärkten Kunststoffwerkstoffen hergestellten Zahnräder führt, erfindungsgemäß vermieden.

Das erfindungsgemäße Zahnradgetriebe bietet somit insbesondere für den Einsatz von faserverstärkten Werkstoffen zur Fertigung der Zahnräder ein weites Anwendungsgebiet. Je nach Anforderungen an das erfindungsgemäße Getriebe können Zahnräder beispielsweise aus Glasfaserverstärktem Kunststoff (GFK), oder für besonders hochbelastete Anwendungsfälle aus einem Kohlenstofffaserverstärktem Kunststoff (CFK), hergestellt sein.

In einer Weiterbildung der Erfindung kann ein solches Zahnradgetriebe, bei dem Zahnräder eingesetzt werden, die aus einem faserverstärkten Werkstoff, vorzugsweise aus einem Glasfaserverstärkten Kunststoff (GFK), besonders bevorzugt aus einem Kohlenstofffaserverstärktem Kunststoff (CFK), hergestellt sind, im Betrieb schmiermittelfrei sein.

Insbesondere mit Carbonfasern verstärkte CFK-Kunststoffe weisen eine hohe selbstschmierende Wirkung auf mit sehr guter Gleitwirkung auf. Im Betrieb bietet ein solches erfindungsgemäßes Zahnradgetriebe den Vorteil, besonders umweltfreundlich zu sein, da kein Schmiermittel erforderlich ist. Da kein flüssigkeitsdichtes Getriebegehäuse mit erheblichem Baugewicht erforderlich ist, kann ein solches erfindungsgemäßes Zahnradgetriebe kompakt mit besonders kleinen Abmessungen sowie mit geringem Gewicht konstruiert werden. Außerdem ist der Wartungsaufwand im Dauerbetrieb gering.

Sofern beim erfindungsgemäßen Zahnradgetriebe bei hoher Belastung im schmiermittelfreien Betrieb Kühlung erforderlich wird, kann es beispielsweise mit einer Luftkühlung und/oder aufgrund seiner Korrosionsfestigkeit mit einem ökologisch unbedenklichen, unschädlichen Kühlmittel auf Wasserbasis gekühlt werden.

Im Rahmen der Erfindung wird auch ein Zahnradgetriebe angegeben, dass besonders robust für ständige Lastwechsel bei gleichbleibender Drehrichtung ist, wobei das Zahnradgetriebe zumindest eine erste Zahnradpaarung sowie eine zweite Zahnradpaarung umfasst, wobei jede der zumindest zwei Zahnradpaarungen jeweils ein erstes, treibendes Zahnrad, das als Kopfrad ausgeführt ist, sowie ein zweites, getriebenes Zahnrad, das als Fußrad ausgeführt ist, umfasst, wobei auf einer ersten Drehwelle sowie auf einer zweiten Drehwelle jeweils nebeneinander alternierend zumindest ein erstes, als Kopfrad ausgeführtes Zahnrad, sowie ein zweites, als Fußrad ausgeführtes Zahnrad, befestigt sind, und wobei die erste Drehwelle und die zweite Drehwelle so positioniert sind, dass jeweils gegengleich ein Kopfrad auf einer Drehwelle mit einem Fußrad als Gegenrad auf der gegenüberliegenden Drehwelle in Zahneingriff ist und eine Zahnradpaarung bildet.

Die zumindest zwei Zahnräder, ein Kopfrad und ein daneben angeordnetes Fußrad auf der ersten Drehwelle, kämmen mit ihren Zahnflanken die gegenüberliegenden Zahnflanken der zumindest zwei korrespondierenden Zahnräder, einem Fußrad und einem Kopfrad, auf der zweiten Drehwelle. Der Zahneingriff erfolgt jeweils gegengleich, sodass jeweils ein Fußrad das Gegenrad für ein Kopfrad bildet.

Durch Verdoppeln bzw. durch Vervielfachen der Eingriffsflächen sowie durch geeignetes Einstellen des Flankenspiels kann ein gleichzeitiger und möglichst ruckfreier Zahneingriff der gegengleich angeordneten Zahnradpaarungen ermöglicht werden.

Das jeweilige Flankenspiel der Zahnräder wird dabei so gewählt bzw. eingestellt, dass im Betrieb des Zahnradgetriebes bei jeder Zahnradpaarung jeweils eine Zugverzahnung mit ausschließlich ziehender Gleitreibung ausgebildet ist.

In einer vorteilhaften Weiterbildung eines solchen Zahnradgetriebes sind die jeweils auf einer Drehwelle nebeneinander angeordneten Zahnräder, die alternierend als Kopfrad und als Fußrad ausgeführt sind, mit einem das Flankenspiel definierenden Drehwinkel zueinander versetzt fest miteinander verbunden.

Die zumindest zwei nebeneinander angeordneten Zahnräder können dazu mittels der Drehwelle und/oder entlang ihrer benachbarten Seitenflächen miteinander verbunden sein.

Bei einem herkömmlichen Getriebe mit einer Evolventenverzahnung wird das Spiel der Zahnräder im laufenden Betrieb größer, was insbesondere im Fall der Rekuperation störend ist.

Das erfindungsgemäße Zahnradgetriebe bietet den Vorteil, dass bei zumindest zwei nebeneinander angeordneten Zahnrädern, die mit ihren benachbarten Seitenflächen miteinander verbunden sind, eine Seitenverzahnung an den Seitenflächen der Zahnräder vorgesehen sein kann.

Somit lässt sich erforderlichenfalls im laufenden Betrieb das Spiel der Zahnräder des Zahnradgetriebes justieren, indem jeweils auf einer Drehwelle nebeneinander angeordneten Zahnräder, die alternierend als Kopfrad und als Fußrad ausgeführt sind, mittels der Seitenverzahnung mit einem das Flankenspiel definierenden, geänderten Drehwinkel zueinander versetzt wiederum fest miteinander verbunden werden. Somit kann ein kaum spürbarer, ruckfreier Übergang zwischen Schub- und Zugbetrieb des erfindungsgemäßen Getriebes gewährleistet werden.

Die im Folgenden verwendeten Positionsangaben von Bauteilen oder Komponenten eines Zahnradgetriebes, wie beispielsweise die Begriffe "oben", "unten", "oberhalb", "unterhalb", "vorne", "hinten", "seitlich", "innerhalb", "außerhalb", "in axialer Richtung", "in radialer Richtung" und dergleichen, dienen im Wesentlichen dem besseren Verständnis der Erfindung, insbesondere in Verbindung mit den nachfolgenden Zeichnungen. Die verwendeten Positionsangaben können sich möglicherweise auf bestimmte Positionen von einzelnen von Bauteilen oder Komponenten im Betrieb eines erfindungsgemäßen Zahnradgetriebes oder auf einzelnen Ansichten in den Figuren beziehen. In jedem Fall sind solche Positionsangaben dem Fachmann geläufig.

KURZE BESCHREIBUNG DER FIGUREN

Die Erfindung wird nun anhand von Ausführungsbeispielen näher erläutert. Die schematischen Zeichnungen sind jeweils beispielhaft und sollen den Erfindungsgedanken darlegen. Dabei zeigen:

Fig. 1    in einer Seitenansicht ein Detail eines aus dem Stand der Technik bekannten Zahnradgetriebes mit einer Evolventenverzahnung zweier Zahnräder;

Fig. 2    in einer Seitenansicht ein Detail einer ersten Ausführungsvariante eines erfindungsgemäßen Zahnradgetriebes mit einer Zugverzahnung zweier Zahnräder;

**Fig. 3**   ein Detail von Fig. 2;

**Fig. 4**   in einer Seitenansicht ein Detail einer zweiten Ausführungsvariante eines erfindungsgemäßen Zahnradgetriebes mit jeweils zwei nebeneinander auf zwei Wellen angeordneten Zahnradpaarungen, die jeweils paarweise miteinander in Eingriff stehen.

FUNKTIONSWEISE DER ERFINDUNG

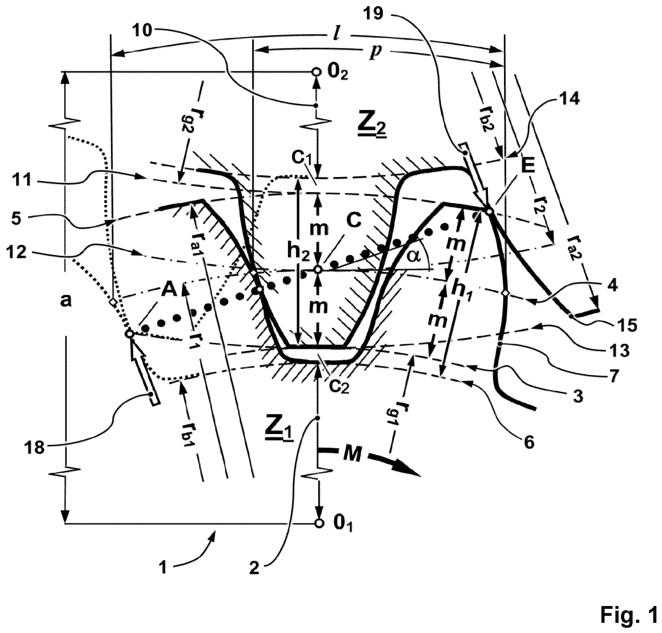

**Fig. 1** zeigt in einer schematischen Seitenansicht eine Stirnradpaarung einer aus dem Stand der Technik bereits bekannten Evolventenverzahnung zweier Zahnräder $Z_1$, $Z_2$, die miteinander in Eingriff stehen und ein Zahnradgetriebe bilden. Die hier verwendeten Verzahnungsmaße sind dem Fachmann auf dem Gebiet von Zahnradgetrieben geläufig. Der besseren Übersicht wegen sind in Fig. 1 die wesentlichen Verzahnungsmaße zusätzlich auch mit Bezugszeichen versehen.

In Fig. 1 ist ein herkömmliches Zahnradgetriebe 1 mit einer Evolventenverzahnung gezeigt. Mit dem Bezugszeichen 2 ist ein erstes, treibendes Zahnrad $Z_1$ des Zahnradgetriebes 1 bezeichnet, das um eine erste Achse $0_1$ drehbar gelagert ist. Das erste Zahnrad 2 ist hier ausschnittsweise mit zwei benachbarten Zähnen als treibendes Zahnrad $Z_1$ dargestellt, welches ein in Antriebsrichtung mit einem Pfeil M symbolisiertes Drehmoment M eines mit dem Zahnrad $Z_1$ gekoppelten Antriebs auf ein Gegenrad überträgt.

Das erste Zahnrad 2 weist einen strichliert gezeichneten Grundkreis 3 mit einem Grundkreisradius $r_{g1}$ auf. Das Bezugszeichen 4 bezieht sich auf den Teilkreis 4 mit dem Teilkreisradius $r_1$ des treibenden Zahnrads $Z_1$ bzw. Zahnrads 2. Das erste Zahnrad 2 ist hier als sogenanntes Nullzahnrad ohne Profilverschiebung dargestellt. Der Teilkreis 4 entspricht in diesem Fall somit dem Wälzkreis und ist in Fig. 1 strichpunktiert eingezeichnet. Außerdem entspricht der Teilkreisradius $r_1$ in diesem Fall dem Wälzkreisradius des treibenden Zahnrads $Z_1$.

Unter einer Profilverschiebung versteht der Fachmann, dass bei der Fertigung eines Zahnrads der Abstand des herstellenden Werkzeugs zum Zahnrad radial verschoben wird. Der Abstand des Werkzeugs zum herzustellenden Zahnrad kann dabei vergrößert oder verkleinert werden. Der Profilverschiebungsfaktor x gibt die auf den Modul m bezogene radiale Verschiebung des Werkzeugs an. Im Falle einer in Fig. 1 nicht gezeigten Profilverschiebung unterscheidet sich der Teilkreis üblicherweise vom Wälzkreis.

Weiters weist das Zahnrad 2 einen Kopfkreis 5 mit einem Kopfkreisradius $r_{a1}$ auf. Ein Fußkreis 6 mit dem Fußkreisradius $r_{b1}$ ist ebenfalls mit einer strichlierten Konturlinie symbolisiert. Ein Spaltmaß des treibenden Zahnrads $Z_1$ bzw. ersten Zahnrads 2 gegenüber dem Gegenrad, welches in die Zähne des ersten Zahnrads 2 eingreift, ist als Kopfspiel $c_1$ bezeichnet. Das Bezugszeichen 7 bezieht sich auf eine Zahnflanke 7 des treibenden Zahnrads $Z_1$ bzw. ersten Zahnrads 2.

In Fig. 1 im Bild oben ist mit dem Bezugszeichen 10 ein Detailausschnitt von zwei benachbarten Zähnen eines zweiten, getriebenen Zahnrads $Z_2$ gezeigt, das im Weiteren auch als Gegenrad 10 bezeichnet wird. Das zweite Zahnrad 10 bzw. Gegenrad ist um eine zweite Achse $0_2$ drehbar gelagert.

Das zweite Zahnrad 10 weist einen Grundkreis 11 mit einem Grundkreisradius $r_{g2}$ auf. Das Bezugszeichen 12 bezieht sich auf den Teilkreis 12 mit dem Teilkreisradius $r_2$ des getriebenen Zahnrads $Z_2$ bzw. Zahnrads 10. Das zweite Zahnrad 10 ist hier ebenfalls als Nullzahnrad ohne Profilverschiebung dargestellt. Der Teilkreis 12 entspricht in diesem Fall somit dem Wälzkreis und ist in Fig. 1 ebenfalls strichpunktiert eingezeichnet. Außerdem entspricht der Teilkreisradius $r_2$ in diesem Fall dem Wälzkreisradius des getriebenen Zahnrads $Z_2$.

Weiters weist das zweite Zahnrad 10 einen Kopfkreis 13 mit einem Kopfkreisradius $r_{a2}$ auf. Ein Fußkreis 14 des zweiten Zahnrads 10 mit dem Fußkreisradius $r_{b2}$ ist ebenfalls mit einer strichlierten Konturlinie symbolisiert. Ein Spaltmaß des getriebenen Zahnrads $Z_2$ bzw. des zweiten Zahnrads 10 gegenüber dem ersten Zahnrad 2, welches in die Zähne des zweiten Zahnrads 10 eingreift, ist als Kopfspiel $c_2$ bezeichnet. Das Bezugszeichen 15 bezieht sich auf eine Zahnflanke 15 des getriebenen Zahnrads $Z_2$ bzw. zweiten Zahnrads 10.

Der Abstand zwischen den beiden Drehachsen $0_1$ und $0_2$ der miteinander gepaarten Zahnräder 2,10 wird als Achsabstand a bezeichnet. Die Formgebung bzw. Kontur der Zahnflanken 7 des ersten, treibenden Zahnrads 2 sowie die Formgebung bzw. Kontur der Zahnflanken 15 des zweiten, getriebenen Zahnrads 10 entsprechen hier der Evolventenverzahnung.

Der abwälzende Eingriff der beiden ineinandergreifenden ("kämmenden") Zahnräder 2,10 erfolgt entlang einer in Fig. 1 punktiert symbolisierten Eingriffsgeraden, die durch die Punkte A, C und E definiert wird. Punkt A symbolisiert den Eingriffspunkt A, in dem der Zahnfußbereich eines Zahnes des treibenden ersten Zahnrads 2 den Zahnkopfbereich eines Zahnes des getriebenen zweiten Zahnrads 10 kontaktiert. Der Eingriffspunkt A ist also jener Kontaktpunkt entlang der Zahnflanken, an dem sich die Zahnflanke 7 eines Zahnes des in Fig. 1 unteren, ersten getriebenen Zahnrads 2 und eine Zahnflanke 15 eines Zahnes des in Fig. 1 oberen, zweiten angetriebenen Zahnrads 10 erstmals berühren. Die Konturen der einander berührenden Zahnflanken 7,15 zum Zeitpunkt des Kontaktbeginns im Eingriffspunkt A sind in Fig. 1 jeweils mit punktierten Linien angedeutet. Der Punkt C bezeichnet den Wälzpunkt C, der Punkt E den Endpunkt E der Eingriffslinie, die hier im Fall der Evolventenverzahnung eine Eingriffsgerade ist.

Die Teilung p gibt den Abstand gleicher Zahnflanken 7,15 jeweils benachbarter Zähne eines Zahnrads 2,10 auf den jeweiligen Wälzkreisen der Zahnräder 2,10 an, wobei sich die Wälzkreise der Zahnräder 2,10 im Wälzpunkt C berühren. Im hier vorliegenden Fall ist die Teilung p durch den genormten Modul m = p / $\pi$ bestimmt, weshalb der zugehörige Wälzkreis eines Zahnrads 2,10 jeweils mit dem entsprechenden Teilkreis des betreffenden Zahnrads 2,10 zusammenfällt. Der Wälzkreis des ersten Zahnrads 2 entspricht daher in Fig. 1 dem strichpunktierten Teilkreis 4 mit dem Teilkreisradius $r_1$. Der Wälzkreis des zweiten Zahnrads 10 entspricht daher in Fig. 1 dem strichpunktierten Teilkreis 12 mit dem Teilkreisradius $r_2$.

Die punktiert eingezeichnete Eingriffsgerade durch die Punkte A, C, E ist um einen Eingriffswinkel $\alpha$ geneigt in Bezug zur Orthogonalen auf die Verbindungsgerade bzw. den Achsabstand a zwischen den Achsen $0_1, 0_2$ der beiden in Eingriff stehenden Zahnräder 2,10 durch den Wälzpunkt C.

Der Eingriffswinkel $\alpha$ entspricht dem Flankenwinkel eines Bezugsprofils ohne Profilverschiebung. Für Zahnradgetriebe sind beispielsweise Eingriffswinkel von 17,5° bis 20° üblich.

Entsprechend der Kinematik einer herkömmlichen Evolventenverzahnung erfolgt beginnend im Eingriffspunkt A ein mit stoßender Gleitreibung simultan abwälzender Zahneingriff, der im weiteren Ablauf entlang des Streckenabschnitts AC der Eingriffsgeraden bis zum punktuell reibungslosen Abwälzen im Wälzpunkt C fortgesetzt wird. Die in Fig. 1 mit durchgehenden Linien eingezeichneten Konturen der einander berührenden Zahnflanken 7,15 zeigen das Zahnradgetriebe 1 zum Zeitpunkt des Abwälzens im Wälzpunkt C.

Vom Eingriffspunkt A, in dem der Zahnfußbereich des treibenden ersten Zahnrads 2 den Zahnkopfbereich des getriebenen zweiten Zahnrads 10 kontaktiert, bis zum Wälzpunkt C wird die Zahnkopfflanke des getriebenen zweiten Zahnrads 10 vom Zahnfußbereich des treibenden ersten Zahnrads 2 weggestoßen. Die Abwälzbewegung der in Eingriff stehenden Zahnräder 2,10 im entsprechenden Streckenabschnitt AC entlang der Eingriffsgeraden wird daher auch als "stoßendes Gleiten" bezeichnet. Der Vektorpfeil 18 symbolisiert in Pfeilrichtung 18 die Kraftrichtung der stoßenden Gleitreibung.

Die Abwälzbewegung der in Eingriff stehenden Zahnräder 2,10 im daran anschließenden Streckenabschnitt CE entlang der Eingriffsgeraden ab dem Wälzpunkt C bis zum Endpunkt E wird als "ziehendes Gleiten" bezeichnet. Die Bewegung der in Eingriff stehenden Zahnräder 2,10 entlang dieses Streckenabschnitts CE ist eine durch den Vektorpfeil 19 symbolisierte Kraftrichtung der ziehenden Gleitreibung 19 mit permanent zunehmender Gleitgeschwindigkeit entlang der Eingriffsgeraden im Streckenabschnitt CE.

Die Eingriffslänge l ist definitionsgemäß der vom Beginn bis zum Ende des Zahneingriffs durchlaufene Drehweg vom Anfangspunkt A bis zum Endpunkt E auf dem Wälzkreis, der hier dem Teilkreis 4 bzw. 12 des jeweiligen Zahnrads 2,10 entspricht. Als Eingriffsstrecke wird der für den Zahneingriff tatsächlich ausgenutzte Teil der Eingriffslinie bzw. Eingriffsgeraden bezeichnet.

Während der Berührpunkt bzw. Kontaktpunkt auf der Eingriffslinie bzw. hier Eingriffsgeraden entlangwandert, variiert die Gleitgeschwindigkeit der Zähne zueinander. Vom Standpunkt des treibenden Zahnrads $Z_1$ bzw. Zahnrads 2 aus herrscht am Anfang des Eingriffs schiebendes Gleiten vor, das bis zum Wälzpunkt C hin abnimmt. Im Wälzpunkt C wird die Gleitgeschwindigkeit zu Null. Der Wälzpunkt C befindet sich im Schnittpunkt zwischen der Eingriffsgeraden und der Verbindungsgeraden der Zahnradachsen $0_1, 0_2$. In diesem Punkt liegt reines gleitfreies Abwälzen vor. Im nachfolgenden, zweiten Streckenabschnitt der Eingriffsgeraden steigt die Gleitgeschwindigkeit vom Wälzpunkt C bis zum Endpunkt E in ziehender Bewegungsrichtung wieder an. Die Vorzeichen der Geschwindigkeiten sind für das angetriebene Zahnrad dementsprechend vertauscht.

Die Umkehr der Gleitrichtung im Wälzpunkt C kann durch den dabei auftretenden Reibwechselstoß eine mögliche Geräuschursache im Betrieb eines solchen Zahnradgetriebes 1 darstellen.

Die Evolventenverzahnung wird durch die Form ihrer Zahnflanken 20,21 mit den auf den Grundkreisen 4,12 errichteten Kreisevolventen gemäß der sogenannten Involut-Funktion:

$$\text{inv } \alpha = \tan(\alpha) - \alpha$$

mit dem Eingriffswinkel $\alpha$ definiert.

Das treibende, erste Zahnrad $Z_1$ (Bezugszeichen 2) weist eine Anzahl $z_1$ von mehreren Zähnen mit dem Teilkreis 4 und einem Teilkreisradius $r_1$ auf. Das getriebene, zweite Zahnrad $Z_2$ (Bezugszeichen 10) weist eine Anzahl $Z_2$ von mehreren Zähnen mit dem Teilkreis 12 und einem Teilkreisradius $r_2$ auf.

Der Modul m, ein wesentliches Verzahnungsmaß für Zahnräder, ist als Quotient des Teilkreisdurchmessers bzw. des doppelten Teilkreisradius $r_1, r_2$ (in mm angegeben) und der Zähnezahl $z_1, z_2$ der miteinander in Eingriff stehenden Zahnräder $Z_1, Z_2$ definiert:

$$m = 2 \; r_1 \; / \; z_1 = 2 \; r_2 \; / \; z_2$$

Um kompatible Verzahnungsabmessungen zu gewährleisten sowie die Herstellungsverfahren solcher Zahnräder bzw. Zahnradgetriebe zu rationalisieren, ist eine Normzahnhöhe h der Evolventenverzahnung festgelegt mit:

$$h = 2m + c; \; bzw. \; h_1 = 2m + c_2 \; ; \; h_2 = 2m + c_1$$

Die Zahnhöhen $h_1$ und $h_2$ der beiden Zahnräder $Z_1$, $Z_2$ setzen sich bei der Evolventenverzahnung jeweils zusammen aus dem Anteil der Kopfhöhe, also der Höhe der Zahnkopfflanken des jeweiligen Zahnkopfes, der üblicherweise dem Modul m entspricht, sowie dem Anteil der Fußhöhe, also der Höhe der Zahnfußflanken des jeweiligen Zahnfußes, der üblicherweise dem Modul m samt dem entsprechenden Kopfspiel $c_2$ bzw. $c_1$ des jeweiligen Gegenrads entspricht. Das Kopfspiel $c_2$ bzw. $c_1$ des jeweiligen Gegenrads, also der Abstand des Kopfkreises vom Fußkreis des jeweiligen Gegenrads, wird üblicherweise mit einem Anteil des Modul m, beispielsweise mit Werten zwischen 0,1 m und 0,3 m, gewählt.

Die Zahnhöhe $h_1$ des in Fig. 1 als treibend dargestellten Ritzels, also das treibende, erste Zahnrad $Z_1$ mit der Achse $0_1$ eines Zahnradgetriebes 1 mit Evolventenverzahnung kann unabhängig vom Modul m auch mit dem Achsabstand a, den Fußkreisradien $r_{b1}$ und $r_{b2}$ und Kopfspielen $c_1$ und $c_2$ beschrieben werden:

$$h_1 = a - (r_{b1} + r_{b2}) - c_1$$

Entsprechend gilt für die Zahnhöhe $h_2$ des getriebenen Gegenrads $Z_2$ mit der Achse $0_2$:

$$h_2 = a - (r_{b1} + r_{b2}) - c_2.$$

Der für eine kontinuierliche Momentübertragung M erforderliche Profilüberdeckungsgrad $\varepsilon_\alpha = l/p$ muss funktional $\geq 1$ sein. Für die industrielle Praxis gilt generell:

$$\varepsilon_\alpha = l/p \geq 1,1 - 1,25.$$

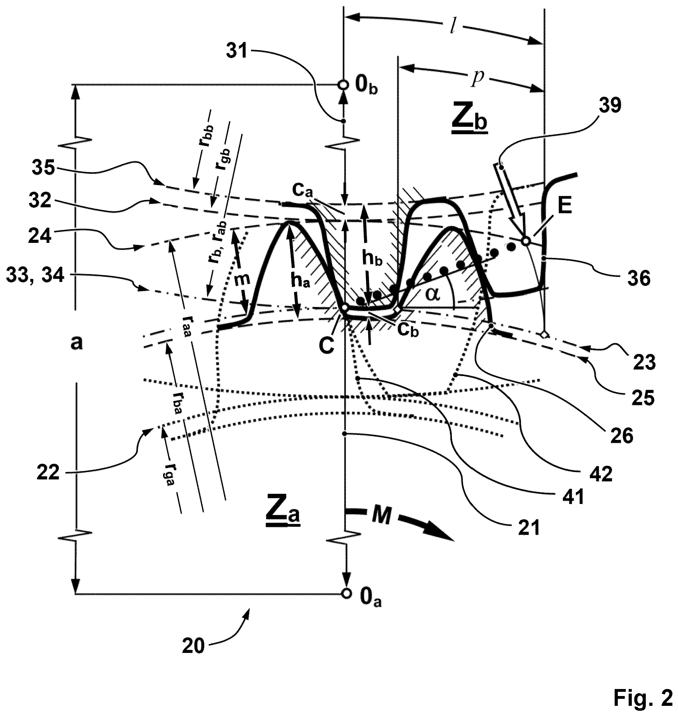

**Fig. 2** zeigt in einer Seitenansicht ein Detail einer ersten Ausführungsvariante eines erfindungsgemäßen Zahnradgetriebes 20 mit einer Zugverzahnung zweier Zahnräder.

Mit dem Bezugszeichen 21 ist ein Detail eines ersten, treibenden Zahnrads $Z_a$ des Zahnradgetriebes 20 bezeichnet, das um eine erste Drehachse $0_a$ drehbar gelagert ist. Das erste Zahnrad 21 ist hier ausschnittsweise mit zwei benachbarten Zähnen als treibendes Zahnrad $Z_a$ dargestellt, welches ein in Antriebsrichtung mit einem Pfeil M symbolisiertes Drehmoment M eines mit dem Zahnrad $Z_a$ gekoppelten Antriebs auf ein Gegenrad überträgt.

Das erste Zahnrad 21 weist einen Grundkreis 22 mit einem Grundkreisradius $r_{ga}$, sowie einen Teilkreis 23 mit einem Teilkreisradius $r_a$ auf. Das erste Zahnrad 2 ist hier ohne Profilverschiebung dargestellt. Der Teilkreis 23 entspricht in diesem Fall somit dem Wälzkreis und ist in Fig. 2 strichpunktiert eingezeichnet. Außerdem entspricht der Teilkreisradius $r_a$ in diesem Fall dem Wälzkreisradius des treibenden Zahnrads $Z_a$.

Im Falle einer in Fig. 2 nicht gezeigten Profilverschiebung unterscheidet sich der Teilkreis üblicherweise vom Wälzkreis.

Weiters hat das Zahnrad 21 einen Kopfkreis 24 mit einem Kopfkreisradius $r_{aa}$. Der Fußkreis 25 des ersten Zahnrads 21 weist einen Fußkreisradius $r_{ba}$ auf. Ein Spaltmaß des treibenden Zahnrads $Z_a$ bzw. ersten Zahnrads 21 gegenüber dem Gegenrad, welches in die Zähne des ersten Zahnrads 21 eingreift, ist als Kopfspiel $c_a$ bezeichnet.

Das erste, treibende Zahnrad 21 weist mehrere Zähne auf mit Zahnkopfflanken 26, deren Formgebung bzw. Flankengeometrie im Bereich jedes Zahnkopfes, der Flankengeometrie bzw. Kontur einer Evolventenverzahnung folgen. Erfindungsgemäß ist das erste, treibende Zahnrad 21 so gestaltet, dass die für die Formgebung der Zahnkopfflanken 26 maßgeblichen Kreisevolventen entsprechend der Involutfunktion der Evolventenverzahnung

$$inv \; \alpha = \tan(\alpha) - \alpha,$$

wobei $\alpha$ wiederum der Eingriffswinkel der schrägen Eingriffsgeraden ist, hier auf dem Grundkreis 22 des treibenden Zahnrads 21 errichtet werden. Der Mittelpunkt des Grundkreises 22 liegt hier im Zentrum der Drehachse $0_a$ und dessen Grundkreisradius $r_{ga}$ ist wie folgt als Differenz des Kopfkreisradius $r_{aa}$ und des zweifachen Moduls m bemessen:

$$r_{Ga} = r_{aa} - 2m$$

Im Vergleich zu Normalzahnhöhen von herkömmlichen Evolventenverzahnungen für ein Nullzahnrad ohne Profilverschiebung, wie dies in Fig. 1 gezeigt und hier in Fig. 2 mit dem punktierten Konturverlauf von Zahnflanken 41 des treibenden Zahnrads einer Evolventenverzahnung ebenfalls skizziert ist, ist ersichtlich, dass erfindungsgemäß das erste, treibende Zahnrad 21 ausschließlich mit Zahnkopfflanken gestaltet ist, wobei die bei einer Evolventenverzahnung üblichen Zahnfußflanken hier beim Zahnrad 21 fehlen. Das erste, treibende Zahnrad 21 wird im Folgenden daher auch als Kopfrad $Z_a$ bezeichnet. Oder in anderen Worten ausgedrückt weist das erste, treibende Zahnrad 21 Zähne mit einer Zahnhöhe $h_a$ auf, die aus dem Anteil der Kopfhöhe, also der Höhe der Zahnkopfflanken des jeweiligen Zahnkopfes, der üblicherweise dem Modul m entspricht, samt dem entsprechenden Kopfspiel $c_b$ des jeweiligen Gegenrads gebildet ist. Der bei einer Evolventenverzahnung übliche Anteil der Fußhöhe, also der Höhe der Zahnfußflanken des jeweiligen Zahnfußes, der üblicherweise dem Modul m entspricht, fehlt im Unterschied dazu hier beim erfindungsgemäßen ersten, treibenden Zahnrad 21 bzw. Kopfrad $Z_a$.

In Fig. 2 im Bild oben ist mit dem Bezugszeichen 31 ein Detailausschnitt von zwei benachbarten Zähnen eines zweiten, getriebenen Zahnrads $Z_b$ gezeigt, das im Weiteren auch als Gegenrad 31 bezeichnet wird. Das zweite Zahnrad 31 ist um eine zweite Drehachse $0_b$ drehbar gelagert.

Das zweite Zahnrad 31 weist einen Grundkreis 32 mit einem Grundkreisradius $r_{g2}$ auf. Das Bezugszeichen 33 bezieht sich auf den Teilkreis mit einem zugehörigen Teilkreisradius $r_b$ des getriebenen Zahnrads $Z_b$ bzw. Zahnrads 31. Das zweite Zahnrad 31 ist hier ebenfalls ohne Profilverschiebung dargestellt. Der Teilkreis 33 entspricht in diesem Fall somit dem Wälzkreis und ist in Fig. 2 strichpunktiert eingezeichnet. Außerdem entspricht der Teilkreisradius $r_b$ in diesem Fall dem Wälzkreisradius des getriebenen, zweiten Zahnrads $Z_b$.

Im Falle einer in Fig. 2 nicht gezeigten Profilverschiebung unterscheidet sich der Teilkreis üblicherweise vom Wälzkreis.

Weiters weist das zweite Zahnrad 31 einen Kopfkreis 34 mit einem Kopfkreisradius $r_{ab}$ auf. Der Fußkreis 35 des getriebenen Zahnrads 31 weist einen Fußkreisradius $r_{bb}$ auf. Das Spaltmaß des getriebenen, zweiten Zahnrads 31 gegenüber dem ersten Zahnrad 21, das in die Zähne des zweiten Zahnrads 31 eingreift, ist als Kopfspiel $c_b$ markiert.

Das Kopfspiel $c_b$ entspricht dem Abstand des Kopfkreises 34 des zweiten Zahnrads 31 vom Fußkreis 25 des ersten Zahnrads 21. Umgekehrt entspricht das Kopfspiel $c_a$ dem Abstand des Kopfkreises 24 des ersten Zahnrads 21 vom Fußkreis 35 des zweiten Zahnrads 31.

Das zweite, getriebene Zahnrad 31 weist mehrere Zähne auf mit Zahnfußflanken 36, deren Formgebung bzw. Flankengeometrie im Bereich jedes Zahnfußes, der Flankengeometrie bzw. Kontur einer Evolventenverzahnung im Bereich des Zahnfußes folgen.

Im Vergleich zu Normalzahnhöhen von herkömmlichen Evolventenverzahnungen für ein Nullzahnrad ohne Profilverschiebung, wie dies in Fig. 1 gezeigt und hier in Fig. 2 mit dem punktierten Konturverlauf von Zahnflanken 42 des getriebenen Zahnrads einer Evolventenverzahnung ebenfalls skizziert ist, ist ersichtlich, dass erfindungsgemäß das zweite, getriebene Zahnrad 31 ausschließlich mit Zahnfußflanken gestaltet ist, wobei hier beim Zahnrad 31 die bei einer Evolventenverzahnung üblichen Zahnkopfflanken fehlen.

Das zweite, getriebene Zahnrad 31 wird im Folgenden daher auch als Fußrad $Z_b$ bezeichnet. Oder in anderen Worten ausgedrückt weist das zweite, getriebene Zahnrad 31 Zähne mit einer Zahnhöhe $h_b$ auf, die aus dem Anteil der Fußhöhe, also der Höhe der Zahnfußflanken des jeweiligen Zahnfußes, der üblicherweise dem Modul m entspricht, samt dem entsprechenden Kopfspiel $c_a$ des ersten, treibenden Zahnrads 21 gebildet ist.

Der bei einer Evolventenverzahnung übliche Anteil der Kopfhöhe, also der Höhe der Zahnkopfflanken des jeweiligen Zahnkopfes, der üblicherweise dem Modul m entspricht, fehlt im Unterschied dazu hier beim erfindungsgemäßen zweiten, getriebenen Zahnrad 31 bzw. Fußrad $Z_b$.

Erfindungsgemäß ist für das zweite, getriebene Zahnrad 31 bzw. Fußrad $Z_b$ der für herkömmliche Evolventenverzahnungen definierte, den Fußkreis 35 um das Kopfspiel $c_a$ übertreffende Grundkreis 32 mit dem Grundkreisradius $r_{gb}$ bei der Ausgestaltung der Zahnfußflanken 36 maßgebend, wobei die Besonderheit der Gestaltung des Fußrads $Z_b$ darin besteht, dass die Evolventen, die der Zahnflankenform zugrunde liegen, ausschließlich bis hin zum Schnittpunkt mit dem Teilkreis 33 des Fußrads $Z_b$ errichtet werden, von wo aus die Zahnflanken 36 direkt und ruckfrei in die Zahnkopfrundungen des Fußrads $Z_b$ bzw. des Zahnrads 31 einmünden. Der Teilkreis 33 fällt hier im Wesentlichen mit dem Kopfkreis 34 zusammen, wobei der Teilkreisradius $r_b$ und der Kopfkreisradius $r_{bb}$ hier etwa gleich groß sind. Gegebenenfalls kann der Kopfkreisradius $r_{ab}$ des Kopfkreises 34 etwas größer sein als der Teilkreisradius $r_b$, um einen gerundeten Übergang zwischen den Zahnflanken 36 - also den Links- und Rechtsflanken jedes Zahnes - und dem eigentlichen Kopfkreisabschnitt des entsprechenden Zahnes des Fußrads $Z_b$ zu gewährleisten.

Für die Zahnhöhen h beider Zahnradtypen, also sowohl des ersten, treibenden Zahnrads 21 bzw. Kopfrads $Z_a$, als auch des zweiten, getriebenen Zahnrads 31 bzw. Fußrads $Z_b$, gilt bei Norm-basierter Auslegung und Fertigung

$$h = m + c; \; bzw. \; h_a = m + c_b \; ; \; h_b = m + c_a$$

Die Zahnhöhen $h_a$ und $h_b$ der beiden Zahnräder $Z_a$, $Z_b$ entsprechen bei der Zugverzahnung jeweils dem Modul m samt dem entsprechenden Kopfspiel $c_b$ bzw. $c_a$ des jeweiligen Gegenrads.

Für Zahnradgetriebe, die auf für Zugverzahnung vorgesehenen Nullrädern basieren, gilt unter Einbezug des Modul m bei gleichbleibendem Achsabstand a:

$$a = r_{ba} + c_b + m + c_a + r_{bb}.$$

Der Achsabstand a ist also die Summe des Fußkreisradius $r_{ba}$ des treibenden Zahnrads bzw. Kopfrads $Z_a$, des Kopfspiels $c_b$ des des getriebenen Zahnrads bzw. Fußrads $Z_b$, des Modul m, des Kopfspiels $c_a$ des Kopfrads $Z_a$ sowie des Fußkreisradius $r_{bb}$ des Fußrads $Z_b$.

Im Vergleich zur in Fig. 1 gezeigten üblichen Evolventenverzahnung mit gleichem Achsabstand a entfallen bei der erfindungsgemäßen Verzahnung die in Fig. 2 gepunktet dargestellten Zahnflankenabschnitte 41,42, ohne dass sich der Achsabstand a in Fig. 2 dadurch ändert.

Ein erfindungsgemäßes Zahnradgetriebe 20 mit Zugverzahnung ist dadurch gekennzeichnet, dass das erste Zahnrad 21, welches als Kopfrad $Z_a$ bezeichnet wird, mit seinen Zahnkopfflanken 26 ein ihm zugeordnetes zweites Zahnrad 31, welches auch als Fußrad $Z_b$ bezeichnet wird, versehen mit zum Kopfrad $Z_a$ kongruenten Zahnfußsegmenten samt zugehörigen Zahnfußflanken 36 auf solche Weise kämmt, dass die bei einer Evolventenverzahnung übliche Phase stoßender Gleitreibung beim Abwälzen der gepaarten Zahnräder entlang des Streckenabschnitts der Eingriffsgeraden zwischen dem Eingriffspunkt A und dem Wälzpunkt C entfällt, die bei einer herkömmlichen Evolventenverzahnung zu Beginn des Zahneingriffs zwangsläufig zu überwinden ist.

Der Zahneingriff des in Fig. 2 treibend dargestellten ersten Zahnrads 21 bzw. Kopfrads $Z_a$ erfolgt somit bei der erfindungsgemäßen Zugverzahnung entlang der punktiert skizzierten Eingriffsgeraden frühestens im Wälzpunkt C, vorzugsweise unmittelbar nach dem Wälzpunkt C, wie dies bei Berücksichtigung der Fertigungstoleranzen bei der Fertigung der Zahnräder möglich ist, um eine Zugverzahnung ausschließlich mit ziehender Gleitreibung zu gewährleisten. Dadurch wird das Drehmoment M beim Zahneingriff vom treibenden ersten Zahnrad 21 besonders schonend auf das getriebene zweite Zahnrad 31 zunächst nahezu reibungslos abwälzend und in weiterer Folge mit zunehmend ziehender Gleitreibung simultan abwälzend bis zum Eingriffsende E auf das getriebene zweite Zahnrad 31 bzw. Fußrad $Z_b$ übertragen, ohne dass es dabei zu einer stoßenden Belastung kommt.

Die Eingriffsgerade durch den Wälzpunkt C und den Endpunkt E ist wie bei der Evolventenverzahnung wiederum um den Eingriffswinkel $\alpha$ in Bezug zur Orthogonalen auf die Verbindungsgerade zwischen den Achsen $0_a, 0_b$ der beiden in Eingriff stehenden Zahnräder 21,31 durch den Wälzpunkt C geneigt.

Vorteilhaft sind hier in Fig. 2 die Zähne der beiden Zahnräder 21,31 jeweils symmetrisch geformt und können daher in beiden Drehrichtungen Momente und/oder Gegenmomente übertragen.

Um ein besonders leichtes Zahnradgetriebe 20 bereitzustellen, das flexibel einsetzbar ist, sind die beiden Zahnräder 21,31 hier jeweils aus Kohlenstofffaserverstärktem Kunststoff (CFK) hergestellt.

Für eine funktionsfähige Zugverzahnung können auch von den normierten Modul-Werten m abweichende Abmessungen zum Einsatz kommen, solange damit das Verzahnungsgesetz eingehalten wird.

Das Verzahnungsgesetz beschreibt, wie ineinandergreifende ("kämmende") Zahnräder beschaffen sein müssen, um eine gleichförmige Übersetzung der Winkelgeschwindigkeit zu erzielen.

Gemäß dem Verzahnungsgesetz gilt:

1. Zu jedem Zeitpunkt der Drehmomentübertragung M befindet sich zumindest ein Zahnpaar der Zahnradpaarung $Z_a$ - $Z_b$ miteinander in Eingriff;
2. Die gemeinsame Normale der beiden Zahnprofile geht in jedem möglichen Berührungspunkt bzw. Eingriffspunkt zweier Zahnflanken stets durch den Wälzpunkt C, der die Verbindungslinie zwischen den Drehachsen $0_a, 0_b$ der beiden Zahnräder 21,31 teilt.

Der Modul m kann ferner bei der erfindungsgemäßen Zugverzahnung im Vergleich zur üblichen Evolventenverzahnung deutlich reduziert werden, ohne dass sich wegen reduzierter Krümmungsradien die Hertz'sche Pressung im Zahneingriff bzw. im jeweiligen Kontaktpunkt der Zahnflanken 26,36 erhöht.

Ebenso können bei einem erfindungsgemäßen Zahnradgetriebe das Kopfspiel $c_a$ des treibenden Zahnrads $Z_a$ und/oder das Kopfspiel $c_b$ des getriebenen Zahnrads $Z_b$ möglichst verringert werden. Im Fall einer Halbierung des sonst bei Evolventenverzahnungen für das Kopfspiel üblichen Werten von rund 0,3 m auf ein Kopfspiel $c_a$ bzw. $c_b$ von 0,15 m ergibt sich wegen der dadurch ebenfalls halbierten Biegehebel bei identer Zahnlückenrundung die nötige Zahnfußfestigkeit für Traglasten, die mit den Traglasten herkömmlicher Evolventenverzahnungen vergleichbar sind.

Die betragsgemäße Länge der Eingriffsstrecke AC (siehe Fig. 1; mit "stoßendem Gleiten") bei einer herkömmlichen Evolventenverzahnung ist in der Regel kürzer als die betragsgemäße Länge der Eingriffsstrecke CE (mit "ziehendem Gleiten").

Deshalb kann aufgrund eines im Vergleich zu einem herkömmlichen Zahnradgetriebe 1 mit einer herkömmlichen Evolventenverzahnung beispielsweise halbierten Moduls m im Falle des erfindungsgemäßen Zahnradgetriebes 20 mit Zugverzahnung ein verdoppelter Zahneingriff pro Umdrehung die beim erfindungsgemäßen Zahnradgetriebe verlorene Kontaktstrecke AC (mit einer "stoßenden Gleitbewegung" im Falle einer Evolventenverzahnung) unter Umständen nicht verlustfrei hinsichtlich einer maximalen Traglast und/oder Laufruhe des Zahnradgetriebes 20 kompensieren.

In solchen Fällen können allerdings sowohl die maximal mit einem erfindungsgemäßen Zahnradgetriebe 20 mit Zugverzahnung übertragbare Traglast, als auch die Laufruhe des Getriebes durch eine oder mehrere der folgenden Maßnahmen verbessert werden:

- Durch die Erhöhung der Zahnbreite kann die maximale Traglast des Getriebes erhöht werden;
- Durch geeignete Schrägverzahnung und Profilverschiebung und/oder mit gestaffelt angeordneter Geradverzahnung kann die Profilüberdeckung $\varepsilon_\alpha$ auf den industriellen Standard von $\varepsilon_\alpha = l/p \geq 1,1 - 1,25$ oder darüber hinaus angehoben werden.

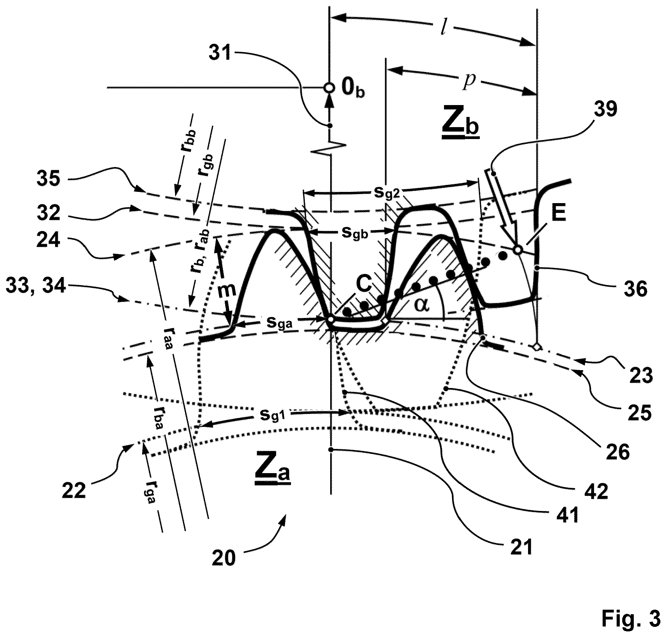

**Fig. 3** zeigt einen Detailausschnitt von Fig. 2. Hier ist das Verhältnis der Zahndicken skizziert im Vergleich der herkömmlichen Evolventenverzahnung, wie dies in Fig. 1 dargestellt ist, und der erfindungsgemäßen Ausführung gemäß Fig. 2. Hinsichtlich der Evolventenverzahnung wird Bezug genommen auf die punktiert skizzierten Zahnflanken 41 des treibenden Zahnrads $Z_1$ einer Evolventenverzahnung bzw. die Zahnflanken 42 des getriebenen Zahnrads $Z_2$ einer Evolventenverzahnung. Im gegenständlichen Fall ist insbesondere für den Vergleich der Zahndicken die Zahnfußfestigkeit des erfindungsgemäßen Zahnradgetriebes 20 von besonderem Interesse.

Der Doppelpfeil $s_{g1}$ markiert die Zahndicke $s_{g1}$ des treibenden Zahnrads $Z_1$ der Evolventenverzahnung im Bereich seines Grundkreises 3, wie dieser in Fig. 1 eingezeichnet ist. Da in Fig. 2 bzw. Fig. 3 die punktiert skizzierten Zahnflanken 41 des treibenden Zahnrads $Z_1$ der Evolventenverzahnung bzw. die Zahnflanken 42 des getriebenen Zahnrads $Z_2$ der Evolventenverzahnung aus Fig. 1 übernommen wurden, entspricht der Grundkreis 3 des treibenden Zahnrads $Z_1$ der Evolventenverzahnung dem Grundkreis 22 des erfindungsgemäßen Fußrads $Z_a$. Der Doppelpfeil $s_{g2}$ markiert die Zahndicke $s_{g2}$ des getriebenen Zahnrads $Z_2$ der Evolventenverzahnung.

Im Falle des erfindungsgemäßen Zahnradgetriebes 20 ist die Zahndicke $s_{ga}$ des treibenden Zahnrads $Z_a$, welche hier am Teilkreis 23 mit dem Teilkreisradius $r_a$ des Zahnrads 21 gemessen wird, kleiner als die vergleichbare Zahndicke $s_{g1}$ des treibenden Zahnrads $Z_1$ bei einer Evolventenverzahnung. Ebenso ist die Zahndicke $s_{gb}$ des getriebenen Zahnrads $Z_b$, welche am Grundkreis 32 des Zahnrads 31 gemessen wird, kleiner als die vergleichbare Zahndicke $s_2$ des treibenden Zahnrads $Z_2$ bei einer Evolventenverzahnung.

Da beim erfindungsgemäßen Kopfrad $Z_a$ der Fußbereich fehlt, werden vereinbarungsgemäß beim erfindungsgemäßen Zahnradgetriebe 20 daher die Zahndicken $s_{ga}$ des ersten, treibenden Zahnrads 21 bzw. des Kopfrads $Z_a$ an seinem Teilkreis 23 mit dem Teilkreisradius $r_a$ gemessen. im Vergleich zu einem herkömmlichen Zahnrad $Z_1$ mit Evolventenverzahnung 1, bei dem die Zahndicke $s_{g1}$ an dessen Grundkreis 3 zur Beurteilung der Zahnfußfestigkeit herangezogen wird, werden also die Zahndicke $s_{ga}$ des erfindungsgemäßen Kopfrads $Z_a$, gemessen an seinem Teilkreis 23, mit jener Zahndicke $s_{g1}$ eines herkömmlichen Evolventenzahnrads $Z_1$, gemessen an dessen Grundkreis 3, miteinander verglichen. In Fig. 3 fällt der Grundkreis 3 des Evolventenzahnrads $Z_1$ mit dem Grundkreis 22 des erfindungsgemäßen Kopfrads $Z_a$ zusammen.

Im Falle des zweiten, getriebenen Zahnrads 31 bzw. Fußrads $Z_b$ erfolgt der Vergleich der Zahndicken $s_{gb}$ des erfindungsgemäßen Fußrads $Z_b$ mit einem herkömmlichen Zahnrad $Z_2$ einer Evolventenverzahnung 1 jeweils am jeweiligen Grundkreis 32 bzw. 11 des betreffenden Zahnrads, da im gegenständlichen Fall wie gesagt die Zahnfußfestigkeit des erfindungsgemäßen Zahnradgetriebes von besonderem Interesse ist. In Fig. 3 fällt der Grundkreis 11 des Evolventenzahnrads $Z_2$ mit dem Grundkreis 32 des erfindungsgemäßen Kopfrads $Z_b$ zusammen.

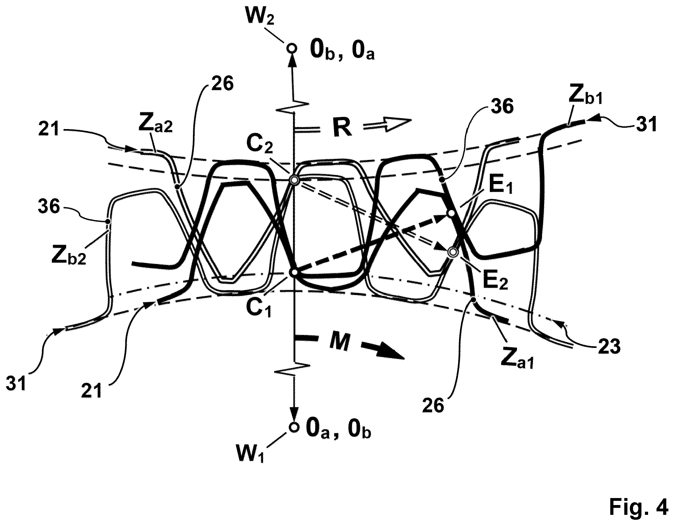

**Fig. 4** zeigt in einer Seitenansicht ein Detail einer zweiten Ausführungsvariante eines erfindungsgemäßen Zahnradgetriebes 20 mit jeweils zwei nebeneinander auf zwei Drehwellen $W_1$, $W_2$ angeordneten Zahnradpaarungen, die jeweils paarweise miteinander in Eingriff stehen.

Damit im Betrieb eines erfindungsgemäßen Zahnradgetriebes 20 die ausschließlich ziehende Gleitreibung der Zugverzahnung für eine vorbestimmte, dauerhaft gegebene Drehrichtung auch bei einer Beanspruchung mit häufigem Momentwechsel, wie beispielsweise bei einer Belastung mit Torsionsschwingungen, oder bei Lastwechsel zwischen Antriebsphasen und Rekuperationsphasen gewährleistet werden kann, sind zweckmäßigerweise spezielle konstruktive Vorkehrungen zu treffen.

Eine besonders vorteilhafte Konfiguration besteht dafür in einer Kombination von zumindest zwei Paaren von Zahnrädern für ein Zahnradgetriebe, wobei jedes Zahnradpaar eine fest miteinander verbundene Kombination von Kopfrad mit Fußrad darstellt, die hintereinander auf ein-und derselben Drehwelle $W_1$ bzw. $W_2$ angebracht werden, oder direkt über ihre Seitenflächen miteinander verbunden sind.

In Fig. 4 ist die erste Zahnradpaarung anhand von Konturen der miteinander in Eingriff stehenden Umfangszähne der betreffenden Zahnräder mit schwarz ausgezogenen, vollen Konturlinien skizziert. Das Bezugszeichen $Z_{a1}$ bezeichnet ein treibendes Zahnrad $Z_{a1}$ dieser ersten Zahnradpaarung, das vergleichbar mit dem in Fig. 2 gezeigten ersten, treibenden Zahnrad 21 als Kopfrad ausgeführt ist. Mit diesem treibenden Zahnrad $Z_{a1}$ gepaart ist ein getriebenes Zahnrad $Z_{b1}$, das vergleichbar mit dem in Fig. 2 gezeigten zweiten, getriebenen Zahnrad 31 als Fußrad ausgeführt ist. Das

treibende Zahnrad $Z_{a1}$ als Kopfrad und das getriebenes Zahnrad $Z_{b1}$ als Fußrad bilden gemeinsam die erste Zahnradpaarung. Das im Bildvordergrund skizzierte, treibende Zahnrad $Z_{a1}$ ist um die untere Drehachse $0_a$ drehbar gelagert, welche mit der ersten Drehwelle $W_1$ zusammenfällt. Das im Bildvordergrund skizzierte, getriebene Zahnrad $Z_{b1}$ ist um die obere Drehachse $0_b$ drehbar gelagert, welche mit der zweiten Drehwelle $W_2$ zusammenfällt.

Die zweite Zahnradpaarung ist in Fig. 4 im Hintergrund hinter der ersten, vorderen Zahnradpaarung skizziert und wird anhand von Konturen der miteinander in Eingriff stehenden Umfangszähne der betreffenden Zahnräder jeweils mit weißen Doppellinien skizziert. Das Bezugzeichen $Z_{a2}$ bezeichnet ein treibendes Zahnrad $Z_{a2}$ dieser zweiten Zahnradpaarung, das vergleichbar mit dem in Fig. 2 gezeigten ersten, treibenden Zahnrad 21 als Kopfrad ausgeführt ist. Mit diesem treibenden Zahnrad $Z_{a2}$ gepaart ist ein getriebenes Zahnrad $Z_{b2}$, das vergleichbar mit dem in Fig. 2 gezeigten zweiten, getriebenen Zahnrad 31 als Fußrad ausgeführt ist. Das treibende Zahnrad $Z_{a2}$ als Kopfrad und das getriebenes Zahnrad $Z_{b2}$ als Fußrad bilden gemeinsam die zweite Zahnradpaarung. Das im Bildhintergrund skizzierte, treibende Zahnrad $Z_{a2}$ ist hier um die obere Drehachse $0_a$ drehbar gelagert, welche mit der zweiten Drehwelle $W_2$ zusammenfällt. Das im Bildhintergrund skizzierte, getriebene Zahnrad $Z_{b2}$ ist um die untere Drehachse $0_b$ drehbar gelagert, welche mit der ersten Drehwelle $W_1$ zusammenfällt.

Oder anders ausgedrückt sind auf der ersten Drehwelle $W_1$ nebeneinander bzw. hintereinander ein vorderes treibende Zahnrad $Z_{a1}$, das als Kopfrad ausgeführt ist, sowie dahinter ein getriebenes Zahnrad $Z_{b2}$, das als Fußrad ausgeführt ist, befestigt. Die beiden auf derselben ersten Drehwelle $W_1$ nebeneinander angeordneten Zahnräder, das Kopfrad $Z_{a1}$ und das Fußrad $Z_{b2}$, sind mit einem das Flankenspiel definierenden Drehwinkel zueinander versetzt fest miteinander verbunden. Die beiden Zahnräder $Z_{a1}$ und $Z_{b2}$ können dazu mittels der Drehwelle $W_1$ und/oder entlang ihrer benachbarten Seitenflächen miteinander verbunden sein.

Auf der zweiten Drehwelle $W_2$ sind in umgekehrter Reihenfolge vorne ein getriebenes Zahnrad $Z_{b1}$, das als Fußrad ausgeführt ist, und dahinter ein treibendes Zahnrad $Z_{a2}$ als Kopfrad befestigt. Ebenso sind die beiden auf derselben zweiten Drehwelle $W_2$ nebeneinander angeordneten Zahnräder, das Fußrad $Z_{b1}$ und das Kopfrad $Z_{a2}$, mit einem das Flankenspiel definierenden Drehwinkel zueinander versetzt fest miteinander verbunden. Die beiden Zahnräder $Z_{b1}$ und $Z_{a2}$ können dazu mittels der Drehwelle $W_2$ und/oder entlang ihrer benachbarten Seitenflächen miteinander verbunden sein.

Die beiden Zahnräder $Z_{a1}$ (Kopfrad) und $Z_{b2}$ (Fußrad) auf der ersten Drehwelle $W_1$ kämmen mit den Zahnflanken 26 und 36 die Zahnflanken 36 und 26 der beiden korrespondierenden Zahnräder $Z_{b1}$ (Fußrad) und $Z_{a2}$ (Kopfrad) auf der zweiten Drehwelle $W_2$.

Bei Beaufschlagung des gezeigten Zahnradgetriebes mit einem Drehmoment M, beispielsweise einem Antriebsmoment eines Motors, der mit dem Zahnradgetriebe gekoppelt ist, entsprechend der Pfeilrichtung M arbeitet das vordere Kopfrad $Z_{a1}$ treibend und treibt das damit verzahnte vordere Fußrad $Z_{b1}$ an.

Sobald bei Lastwechsel nicht mehr das vordere Kopfrad $Z_{a1}$ treibend arbeitet, sondern bei gleichbleibender Drehrichtung aufgrund eines Bremsmoments R, beispielsweise bei Rekuperation eines Elektromotors, entsprechend der Drehrichtung R das vordere Fußrad $Z_{b1}$ treibend arbeitet und das vordere Kopfrad $Z_{a1}$ bremsend, wird das Flankenspiel zwischen den Zähnen des Fußrads schlagartig geschlossen, die Flanken werden an den Punkten $C_1$ und $E_1$ der Fig. 3 entlastet, und das Bremsmoment R wird nur noch durch den Kontakt an den Punkten $C_2$ und $E_2$ der zuvor durch das Spiel getrennten, einander gegenüberliegenden Flanken der zweiten, hinteren Zahnradpaarung übertragen, die gebildet ist durch das Kopfrad $Z_{a2}$ sowie das Fußrad $Z_{b2}$.

Bei gleichbleibender Drehrichtung ergibt sich somit auch bei Lastwechsel zwischen Antriebsmoment M und Bremsmoment R wiederum keine stoßende, sondern eine ausschließlich ziehende Gleitreibung. Insofern ist auch diese Variante des erfindungsgemäßen Zahnradgetriebes aufgrund des besonders schonenden Zahneingriffs auch bei Lastwechsel für den Einsatz von Zahnrädern aus faserverstärktem Werkstoff besonders gut geeignet.

Im Rahmen der Erfindung können auch noch Zahnradgetriebe bereitgestellt werden, die mehr als zwei gegengleich nebeneinander angeordnete Zahnradpaarungen umfassen. Beispielsweise kann ein erfindungsgemäßes Zahnradgetriebe auch vier, sechs oder acht Zahnradpaarungen umfassen, wobei in alternierender Weise jeweils Kopfräder und Fußräder nebeneinander auf die erste Drehwelle $W_1$ bzw. auf die zweite Drehwelle $W_2$ aufgefädelt werden, sodass jeweils gegengleich ein Kopfrad auf der ersten Drehwelle $W_1$ mit einem Fußrad als Gegenrad auf der zweiten Drehwelle $W_2$ in Eingriff ist. Auch in dieser Ausführung sind auf einer Drehwelle nebeneinander angeordnete Zahnräder mit einem das Flankenspiel definierenden Drehwinkel zueinander versetzt fest miteinander verbunden. Die benachbarten Zahnräder können dazu mittels der Drehwelle und/oder entlang ihrer benachbarten Seitenflächen miteinander verbunden sein.

WEG ZUR AUSFÜHRUNG DER ERFINDUNG

Anhand der zuvor diskutierten Figuren wird ein erfindungsgemäßes Ausführungsbeispiel eines Zahnradgetriebes mit einer Zugverzahnung diskutiert, wie diese in Fig. 2 schematisch dargestellt ist. Ausgegangen wird dabei von einem herkömmlichen Zahnradgetriebe mit einer Evolventenverzahnung gemäß Fig. 1.

Gemäß der nachfolgenden Tabelle wird von einer herkömmlichen Evolventenverzahnung zweier Zahnräder $Z_1$,

$Z_2$, die einander kämmen, mit einem Untersetzungsverhältnis beispielsweise von 1:1,5 ausgegangen. Die hier gewählten Verzahnungsmaße bzw. Verzahnungsparameter für die Durchmesser d, die Anzahl der Zähne z, den Modul m sowie die Zahndicken sind der Tabelle zu entnehmen. Mit den gewählten Parametern wird eine herkömmliche Evolventenverzahnung erhalten, wobei die beiden gepaarten sowie einander kämmenden Zahnräder $Z_1$, $Z_2$ einen Profilüberdeckungsgrad von 1,6 sowie ein Untersetzungsverhältnis von 1:1,5 aufweisen.

Im Vergleich dazu sind die entsprechenden Verzahnungsmaße bzw. Verzahnungsparameter für die Durchmesser d (in mm), die Anzahl der Zähne z (dimensionslos), den Modul m (in mm) sowie die Zahndicken (in mm) für ein erfindungsgemäßes Zahnradgetriebe mit einem Kopfrad $Z_a$ sowie einem Fußrad $Z_b$ angegeben. Diese Zahnradpaarung des erfindungsgemäßen Zahnradgetriebes 22 mit Zugverzahnung ist in Fig. 2 schematisch dargestellt.

Um das Konstruktionsziel zu erfüllen, nämlich ein erfindungsgemäßes Zahnradgetriebe 22 mit Zugverzahnung der beiden Zahnräder $Z_a$ - $Z_b$ mit demselben Verzahnungsverhältnis 1:1,5 (Untersetzung) bereitzustellen, ergibt sich eine deutlich verringerte Zahndicke s der Zähne des Kopfrads $Z_a$ bzw. des Fußrads $Z_b$ im Vergleich zu den Zahndicken des herkömmlichen Evolventengetriebes. Außerdem wird ein ausreichender Profilüberdeckungsgrad von 1,4 erzielt.

Tabelle

| | Zahnrad | 2r, d [mm] | z [-] | Modul m [mm] | s [mm] | l/p [-] | d : d [-] |
|---|---|---|---|---|---|---|---|
| Fig. 1 | $Z_1$ | 104 | 13 | 8 | 7,95 | 1,6 | 1:1,5 |
| Fig. 1 | $Z_2$ | 152 | 19 | 8 | 7,95 | 1,6 | 1:1,5 |
| Fig. 2 | Za | 103,5 | 23 | 4,5 | 4,45 | 1,4 | 1:1,5 |
| Fig. 2 | $Z_b$ | 153 | 34 | 4,5 | 4,45 | 1,4 | 1:1,5 |

Zusammenfassend kann ein erfindungsgemäßes Zahnradgetriebe mit Zugverzahnung bereitgestellt werden, das mit vergleichbaren Zahnraddurchmessern und damit einhergehend mit vergleichbaren Abmessungen wie ein herkömmliches Evolventengetriebe konstruiert ist, das jedoch die eingangs genannten Nachteile eines herkömmlichen Evolventengetriebes überwindet.

BEZUGSZEICHENLISTE

1 Zahnradgetriebe mit einer Evolventenverzahnung
2 (erstes) treibendes Zahnrad $Z_1$
3 Grundkreis des treibenden Zahnrads $Z_1$
4 Teilkreis bzw. Wälzkreis des treibenden Zahnrads $Z_1$
5 Kopfkreis des treibenden Zahnrads $Z_1$
6 Fußkreis des treibenden Zahnrads $Z_1$
7 Zahnflanke des treibenden Zahnrads $Z_1$
10 (zweites) getriebenes Zahnrad $Z_2$; Gegenrad
11 Grundkreis des getriebenen Zahnrads $Z_2$
12 Teilkreis bzw. Wälzkreis des getriebenen Zahnrads $Z_2$
13 Kopfkreis des getriebenen Zahnrads $Z_2$
14 Fußkreis des getriebenen Zahnrads $Z_2$
15 Zahnflanke des getriebenen Zahnrads $Z_2$
18 stoßende Gleitreibung (Pfeil)
19 ziehende Gleitreibung (Pfeil)
20 Zahnradgetriebe mit einer Zugverzahnung
21 (erstes) treibendes Zahnrad $Z_a$; Kopfrad
22 Grundkreis des treibenden Zahnrads $Z_a$
23 Teilkreis bzw. Wälzkreis des treibenden Zahnrads $Z_a$
24 Kopfkreis des treibenden Zahnrads $Z_a$
25 Fußkreis des treibenden Zahnrads $Z_a$
26 Zahn(kopf)flanke des treibenden Zahnrads $Z_a$
31 (zweites) getriebenes Zahnrad $Z_b$; Fußrad
32 Grundkreis des getriebenen Zahnrads $Z_b$
33 Teilkreis bzw. Wälzkreis des getriebenen Zahnrads $Z_b$

| | |
|---|---|
| 34 | Kopfkreis des getriebenen Zahnrads $Z_b$ |
| 35 | Fußkreis des getriebenen Zahnrads $Z_b$ |
| 36 | Zahn(fuß)flanke des getriebenen Zahnrads $Z_b$ |
| 39 | ziehende Gleitreibung (Pfeil) |
| 41 | Zahnflanke des treibenden Zahnrads einer Evolventenverzahnung |
| 42 | Zahnflanke des getriebenen Zahnrads einer Evolventenverzahnung |
| $0_1$ | Drehachse des treibenden Zahnrads $Z_1$ |
| $0_2$ | Drehachse des getriebenen Zahnrads $Z_2$ |
| $0_a$ | Drehachse des (ersten) treibenden Zahnrads $Z_a$ |
| $0_b$ | Drehachse des (zweiten) getriebenen Zahnrads $Z_b$ |
| $\alpha$ | Eingriffswinkel |
| a | Achsabstand zwischen den Drehachsen der Zahnräder $Z_1,Z_2$; $Z_a,Z_b$ |
| A | Eingriffspunkt |
| $c_1$ | Kopfspiel des treibenden Zahnrads $Z_1$ |
| $c_2$ | Kopfspiel des getriebenen Zahnrads $Z_2$ |
| $c_a$ | Kopfspiel des treibenden Zahnrads $Z_a$ |
| $c_b$ | Kopfspiel des getriebenen Zahnrads $Z_b$ |
| C | Wälzpunkt (bzw. $C_1,C_2$) |
| E | Endpunkt (bzw. $E_1,E_2$) |
| $h_1$ | Zahnhöhe des treibenden Zahnrads $Z_1$ |
| $h_2$ | Zahnhöhe des getriebenen Zahnrads $Z_2$ |
| $h_a$ | Zahnhöhe des treibenden Zahnrads $Z_a$ |
| $h_b$ | Zahnhöhe des getriebenen Zahnrads $Z_b$ |
| l | Eingriffslänge l |
| p | Teilung p |
| m | Modul m |
| M | Drehmoment M; Antriebsmoment; Antriebsrichtung (Pfeil) |
| R | Bremsmoment R; Rekuperationsmoment; Drehrichtung (Pfeil) |
| $s_{g1}$ | Zahndicke des treibenden Zahnrads $Z_1$ |
| $s_{g2}$ | Zahndicke des getriebenen Zahnrads $Z_2$ |
| $s_{ga}$ | Zahndicke des treibenden Zahnrads $Z_a$ |
| $s_{gb}$ | Zahndicke des getriebenen Zahnrads $Z_b$ |
| $r_{g1}$ | Grundkreisradius des treibenden Zahnrads $Z_1$ |
| $r_1$ | Teilkreisradius bzw. Wälzkreisradius des treibenden Zahnrads $Z_1$ |
| $r_{a1}$ | Kopfkreisradius des treibenden Zahnrads $Z_1$ |
| $r_{b1}$ | Fußkreisradius $r_{b1}$ des treibenden Zahnrads $Z_1$ |
| $r_{g2}$ | Grundkreisradius des getriebenen Zahnrads $Z_2$ |
| $r_2$ | Teilkreisradius bzw. Wälzkreisradius des getriebenen Zahnrads $Z_2$ |
| $r_{a2}$ | Kopfkreisradius des getriebenen Zahnrads $Z_2$ |
| $r_{b2}$ | Fußkreisradius des getriebenen Zahnrads $Z_2$ |
| $r_{ga}$ | Grundkreisradius des treibenden Zahnrads $Z_a$ |
| $r_a$ | Teilkreisradius bzw. Wälzkreisradius des treibenden Zahnrads $Z_a$ |
| $r_{aa}$ | Kopfkreisradius des treibenden Zahnrads $Z_a$ |
| $r_{ba}$ | Fußkreisradius des treibenden Zahnrads $Z_a$ |
| $r_{gb}$ | Grundkreisradius des getriebenen Zahnrads $Z_b$ |
| $r_b$ | Teilkreisradius bzw. Wälzkreisradius des getriebenen Zahnrads $Z_b$ |
| $r_{ab}$ | Kopfkreisradius des getriebenen Zahnrads $Z_b$ |
| $r_{bb}$ | Fußkreisradius des getriebenen Zahnrads $Z_b$ |
| $W_1$ | erste Drehwelle |
| $W_2$ | zweite Drehwelle |
| $Z_{a1}$ | treibendes Zahnrad $Z_a$ einer ersten Zahnradpaarung; Kopfrad |
| $Z_{b1}$ | getriebenes Zahnrad $Z_b$ einer ersten Zahnradpaarung; Fußrad |
| $Z_{a2}$ | treibendes Zahnrad $Z_a$ einer zweiten Zahnradpaarung; Kopfrad |
| $Z_{b2}$ | getriebenes Zahnrad $Z_b$ einer zweiten Zahnradpaarung; Fußrad |

**Patentansprüche**

**1.** Zahnradgetriebe (20), umfassend ein erstes, treibendes Zahnrad (21), welches um eine erste Drehachse ($0_a$)

gelagert ist, sowie ein zweites, getriebenes Zahnrad (31), welches um eine zweite Drehachse ($0_b$) gelagert ist, wobei das erste, treibende Zahnrad (21) und das zweite, getriebene Zahnrad (31) einander kämmend gepaart sind und deren Verzahnung ineinandergreifende Umfangszähne umfasst, wobei der abwälzende Eingriff der beiden ineinandergreifenden Zahnräder (21,31) entlang einer Eingriffsgeraden (C, E) erfolgt, **dadurch gekennzeichnet, dass**

- das erste, treibende Zahnrad (21) als Kopfrad ($Z_a$) mit Umfangszähnen ausgeführt ist, deren Zahnhöhe ($h_a$) einem einfachen Modul (m) ihrer Zahnkopfflanken (26) samt einem Kopfspiel ($c_b$) entspricht, wobei das Kopfspiel ($c_b$) ein Spaltmaß des Abstands zu dem mit dem ersten, treibenden Zahnrad (21) gepaarten, zweiten, getriebenen Zahnrads (31) ist, und
- das zweite, getriebene Zahnrad (31) als Fußrad ($Z_b$) mit Umfangszähnen ausgeführt ist, deren Zahnhöhe ($h_b$) einem einfachen Modul (m) ihrer Zahnfußflanken (36) samt einem Kopfspiel ($c_a$) entspricht, wobei das Kopfspiel ($c_a$) ein Spaltmaß des Abstands zu dem mit dem zweiten, getriebenen Zahnrad (31) gepaarten, ersten, treibenden Zahnrads (21) ist, und wobei
- ein erster Zahneingriff der Zahnkopfflanken (26) der Umfangszähne des ersten, treibenden Zahnrads (21) mit den Zahnfußflanken (36) der Umfangszähne des damit gepaarten zweiten, getriebenen Zahnrads (31) beim Abwälzen entlang der Eingriffsgeraden (C,E) frühestens in einem Wälzpunkt (C) erfolgt, sodass
- das Zahnradgetriebe (20) im Betrieb eine Zugverzahnung mit ausschließlich ziehender Gleitreibung (39) ausbildet.

2. Zahnradgetriebe (20) nach Anspruch 1, **dadurch gekennzeichnet, dass** ein erster Zahneingriff der Zahnkopfflanken (26) des ersten, treibenden Zahnrads (21) mit den Zahnfußflanken (36) des damit gepaarten zweiten, getriebenen Zahnrads (31) unmittelbar nach dem Wälzpunkt (C) erfolgt.

3. Zahnradgetriebe (20) nach Anspruch 1 oder 2, **dadurch gekennzeichnet, dass** die Umfangszähne des ersten, treibenden Zahnrads (21) in Richtung seiner Drehachse ($0_a$) gesehen und/oder die Umfangszähne des zweiten, getriebenen Zahnrads (31) in Richtung seiner Drehachse ($0_b$) gesehen symmetrisch geformt sind.

4. Zahnradgetriebe (20) nach einem der Ansprüche 1 bis 3, **dadurch gekennzeichnet, dass** das erste, treibende Zahnrad (21) als Kopfrad ($Z_a$) so gestaltet ist, dass die für die Formgebung der Zahnkopfflanken (26) maßgeblichen Kreisevolventen entsprechend einer Involutfunktion der Evolventenverzahnung auf dem Grundkreis (22) des ersten, treibenden Zahnrads (21) angeordnet sind, wobei der Mittelpunkt des Grundkreises (22) im Zentrum der Drehachse ($0_a$) des ersten, treibenden Zahnrads (21) liegt und dessen Grundkreisradius ($r_{ga}$) bemessen ist als Differenz des Kopfkreisradius ($r_{aa}$) und des zweifachen Moduls (m) gemäß der Gleichung: $r_{ga} = r_{aa} - 2m$ .

5. Zahnradgetriebe (20) nach einem der Ansprüche 1 bis 4, **dadurch gekennzeichnet, dass** das erste, treibende Zahnrad (21) als Kopfrad ($Z_a$) gestaltet ist, wobei dessen Zahnflankenform (26) dem oberhalb des Teilkreises (4) liegenden Kopfteil eines Nullzahnrads (2) ohne Profilverschiebung der Evolventenverzahnung (1) entspricht.

6. Zahnradgetriebe (20) nach einem der Ansprüche 1 bis 5, **dadurch gekennzeichnet, dass** das zweite, getriebene Zahnrad (31) als Fußrad ($Z_b$) so gestaltet ist, dass die für die Formgebung der Zahnfußflanken (36) maßgeblichen Kreisevolventen entsprechend der Involutfunktion der Evolventenverzahnung bis zum Teilkreis (33) mit dem Teilkreisradius ($r_b$) des zweiten, getriebenen Zahnrads (31) angeordnet sind, von wo aus die Kreisevolventen in Zahnkopfrundungen des Kopfkreises (34) mit einem Kopfkreisradius ($r_{ab}$) des zweiten, getriebenen Zahnrads (31) einmünden.

7. Zahnradgetriebe (20) nach einem der Ansprüche 1 bis 6, **dadurch gekennzeichnet, dass** das zweite, getriebene Zahnrad (31) als Fußrad ($Z_b$) gestaltet ist, wobei dessen Zahnflankenform (36) dem unterhalb des Teilkreises (12) liegenden Fußteil eines Nullzahnrads (10) ohne Profilverschiebung der Evolventenverzahnung (1) entspricht.

8. Zahnradgetriebe (20) nach Anspruch 6, **dadurch gekennzeichnet, dass** das zweite, getriebene Zahnrad (31) einen Teilkreis (33) mit einem Teilkreisradius ($r_b$) aufweist, der seinem Kopfkreis (34) mit dem Kopfkreisradius ($r_{ab}$) entspricht.

9. Zahnradgetriebe (20) nach einem der Ansprüche 1 bis 8, **dadurch gekennzeichnet, dass** eine Zahndicke ($s_{ga}$) des ersten, treibenden Zahnrads (21) an seinem Teilkreis (23) kleiner ist als eine vergleichbare Zahndicke ($s_{g1}$) eines treibenden Zahnrads (2) bei einer Evolventenverzahnung (1), und/oder eine Zahndicke ($s_{gb}$) des zweiten, getriebenen Zahnrads (31) an seinem Grundkreis (32) kleiner ist als eine vergleichbare Zahndicke ($s_2$) eines treibenden

Zahnrads (10) bei einer Evolventenverzahnung (1).

10. Zahnradgetriebe (20) nach einem der Ansprüche 1 bis 9, **dadurch gekennzeichnet, dass** das erste, treibende Zahnrad (21) sowie das zweite, getriebene Zahnrad (31) jeweils eine Geradverzahnung aufweisen.

11. Zahnradgetriebe (20) nach einem der Ansprüche 1 bis 9, **dadurch gekennzeichnet, dass** das erste, treibende Zahnrad (21) sowie das zweite, getriebene Zahnrad (31) jeweils eine Schrägverzahnung aufweisen.

12. Zahnradgetriebe (20) nach einem der Ansprüche 1 bis 11, **dadurch gekennzeichnet, dass** das erste, treibende Zahnrad (21) sowie das zweite, getriebene Zahnrad (31) aus einem faserverstärkten Werkstoff, vorzugsweise aus einem Glasfaserverstärkten Kunststoff, besonders bevorzugt aus einem Kohlenstofffaserverstärktem Kunststoff, hergestellt sind.

13. Zahnradgetriebe (20) nach Anspruch 12, **dadurch gekennzeichnet, dass** das Zahnradgetriebe (20) im Betrieb schmiermittelfrei ist.

14. Zahnradgetriebe (20) nach einem der Ansprüche 1 bis 13, umfassend zumindest eine erste Zahnradpaarung $(Z_{a1},Z_{b1})$ sowie eine zweite Zahnradpaarung $(Z_{a2},Z_{b2})$, wobei jede der zumindest zwei Zahnradpaarungen jeweils ein erstes, treibendes Zahnrad (21), das als Kopfrad $(Z_{a1},Z_{a2})$ ausgeführt ist, sowie ein zweites, getriebenes Zahnrad (31), das als Fußrad $(Z_{b1},Z_{b2})$ ausgeführt ist, umfasst,
**dadurch gekennzeichnet, dass**
auf einer ersten Drehwelle $(W_1)$ sowie auf einer zweiten Drehwelle $(W_2)$ jeweils nebeneinander alternierend zumindest ein erstes, als Kopfrad $(Z_{a1},Z_{a2})$ ausgeführtes Zahnrad (21), sowie ein zweites, als Fußrad $(Z_{b1},Z_{b2})$ ausgeführtes Zahnrad (31), befestigt sind, wobei die erste Drehwelle $(W_1)$ und die zweite Drehwelle $(W_2)$ so positioniert sind, dass jeweils gegengleich ein Kopfrad $(Z_{a1},Z_{a2})$ auf einer Drehwelle $(W_1,W_2)$ mit einem Fußrad $(Z_{b1},Z_{b2})$ als Gegenrad auf der gegenüberliegenden Drehwelle $(W_2,W_1)$ in Zahneingriff ist und eine Zahnradpaarung bildet.

15. Zahnradgetriebe (20) nach Anspruch 14, **dadurch gekennzeichnet, dass** die jeweils auf einer Drehwelle $(W_1,W_2)$ nebeneinander angeordneten Zahnräder (21,31), die alternierend als Kopfrad $(Z_{a1},Z_{a2})$ und als Fußrad $(Z_{b1},Z_{b2})$ ausgeführt sind, mit einem das Flankenspiel definierenden Drehwinkel zueinander versetzt fest miteinander verbunden sind.

**Claims**

1. Gear transmission (20) comprising a first drive gear (21) which is supported about a first axis of rotation $(0_a)$, as well as a second driven gear (31) which is supported around a second axis of rotation $(0_b)$, wherein the first drive gear (21) and the second driven gear (31) are paired in an intermeshing manner and the gearing of which comprises intermeshing circumferential teeth, wherein the rolling engagement of the two intermeshing gears (21, 31) takes place along an engagement straight line (C, E),
**characterised in that**

• the first drive gear (21) is configured as a tip gear $(Z_a)$ with circumferential teeth whose tooth height $(h_a)$ corresponds to a simple module (m) of its tooth tip flanks (26) together with a tip clearance $(c_b)$, wherein the tip clearance $(c_b)$ is a clearance of the distance to the second driven gear (31) paired with the first driving gear (21), and
• the second, driven gear (31) is configured as a foot gear $(Z_b)$ with circumferential teeth whose tooth height $(h_b)$ corresponds to a simple module (m) of its tooth root flanks (36) together with a tip clearance $(c_a)$, wherein the tip clearance $(c_a)$ is a clearance of the distance to the first drive gear (21) paired with the second driven gear (31), and wherein
• a first tooth engagement of the tooth tip flanks (26) of the circumferential teeth of the first drive gear (21) with the tooth root flanks (36) of the circumferential teeth of the second driven gear (31) paired therewith takes place at the earliest in a pitch point (C) during rolling along the engagement straight line (C, E), so that
• the gear transmission (20), during operation, forms a tension gearing with exclusively receding sliding friction (39).

2. Gear transmission (20) according to claim 1, **characterised in that** a first tooth meshing of the tooth tip flanks (26) of the first drive gear (21) with the tooth root flanks (36) of the second driven gear (31) paired therewith takes place immediately after the pitch point (C).

3. Gear transmission (20) according to claim 1 or 2, **characterised in that** the circumferential teeth of the first drive gear (21) seen in the direction of its rotational axis ($0_a$) and/or the circumferential teeth of the second driven gear (31) seen in the direction of its axis of rotation ($0_b$) are shaped symmetrically.

4. Gear transmission (20) according to any one of claims 1 to 3, **characterised in that** the first drive gear (21) is configured as a tip gear ($Z_a$) such that the circular involutes relevant for shaping the tooth tip flanks (26) are arranged on the base circle (22) of the first drive gear (21) in accordance with an involute function of the involute gearing, wherein the center point of the base circle (22) being located in the center of the axis of rotation ($0_a$) of the first drive gear (21) and its base circle radius ($r_{ga}$) is measured as the difference of the tip circle radius ($r_{aa}$) and the double modulus (m) according to the equation: $r_{ga} = r_{aa} - 2m$.

5. Gear transmission (20) according to any one of claims 1 to 4, **characterised in that** the first drive gear (21) is configured as a head gear ($Z_a$), wherein the tooth flank shape (26) thereof corresponds to the head part of a zero gear (2) located above the pitch circle (4) without any profile displacement of the involute gearing (1).

6. Gear transmission (20) according to any one of claims 1 to 5, **characterised in that** the second, driven gear (31) as a foot gear ($Z_b$) is configured in such a way that the circle involutes relevant for shaping the tooth root flanks (36) are arranged corresponding to the involute function of the involute gearing up to the pitch circle (33) with the pitch circle radius ($r_b$) of the second driven gear (31), from where the circle involutes merge in tooth tip fillets of the tip circle (34) having a tip circle radius ($r_{ab}$) of the second driven gear (31).

7. Gear transmission (20) according to any one of claims 1 to 6, **characterised in that** the second, driven gear (31) is configured as a foot gear ($Z_b$), wherein the shape of its tooth root flanks (36) corresponds to the root portion of a zero gear (10) without any profile shift of the involute gearing (1) located below the pitch circle (12).

8. Gear transmission (20) according to claim 6, **characterised in that** the second driven gear (31) has a pitch circle (33) with a pitch circle radius ($r_b$) which corresponds to its tip circle (34) with the tip circle radius ($r_{ab}$).

9. Gear transmission (20) according to any one of claims 1 to 8, **characterised in that** a tooth thickness ($s_{ga}$) of the first drive gear (21) at its pitch circle (23) is smaller than a comparable tooth thickness ($s_{g1}$) of a drive gear (2) in the case of an involute gearing (1), and/or a tooth thickness ($s_{gb}$) of the second, driven gear (31) at its base circle (32) is smaller than a comparable tooth thickness ($s_2$) of a drive gear (10) in an involute gearing (1).

10. Gear transmission (20) according to any one of claims 1 to 9, **characterised in that** the first drive gear (21) and the second driven gear (31) each have a straight gearing.

11. Gear transmission (20) according to any one of claims 1 to 9, **characterised in that** the first drive gear (21) and the second driven gear (31) each have helical gearing.

12. Gear transmission (20) according to any one of claims 1 to 11, **characterised in that** the first drive gear (21) and the second driven gear (31) are produced from a fiber-reinforced material, preferably from a glass fiber-reinforced plastic, particularly preferably from a carbon fiber-reinforced plastic.

13. Gear transmission (20) according to claim 12, **characterised in that** the gear transmission (20) is lubricant-free during operation.

14. Gear transmission (20) according to any one of claims 1 to 13, comprising at least a first gear pair ($Z_{a1}$, $Z_{b1}$) and a second gear pair ($Z_{a2}$, $Z_{b2}$), wherein each of the at least two gear pairs comprises a first, drive gear (21) configured as a tip gear ($Z_{a1}$, $Z_{a2}$), as well as a second, driven gear (31) configured as a foot gear ($Z_{b1}$, $Z_{b2}$), **characterised in that** on a first rotary shaft ($W_1$) and on a second rotary shaft ($W_2$), at least one first gear (21) configured as tip gear ($Z_{a1}$, $Z_{a2}$) and one second gear (31) configured as a foot gear ($Z_{b1}$, $Z_{b2}$) are mounted in an alternating arrangement next to each other in each case, wherein the first rotary shaft ($W_1$) and the second rotary shaft ($W_2$) are positioned such that in each case a tip gear ($Z_{a1}$, $Z_{a2}$) on one rotary shaft ($W_1$, $W_2$) is in meshing engagement with a foot gear ($Z_{b1}$, $Z_{b2}$) as counter gear on the opposite rotary shaft ($W_2$, $W_1$), thereby forming a gear pair.

**15.** Gear transmission (20) according to claim 14, **characterised in that** the gears (21, 31), which are arranged side by side on a rotary shaft ($W_1$, $W_2$) and are configured alternately as a tip gear ($Z_{a1}$, $Z_{a2}$) and as foot gear ($Z_{b1}$, $Z_{b2}$), are fixedly connected to one another and are offset to one another by a rotational angle defining the flank clearance.

**Revendications**

**1.** Transmission par engrenage (20), comprenant une première roue dentée (21) menante, laquelle est logée autour d'un premier axe de rotation ($0_a$), ainsi qu'une deuxième roue dentée (31) menée, laquelle est logée autour d'un deuxième axe de rotation ($0_b$), la première roue dentée (21) menante et la deuxième roue dentée (31) menée étant appairées en prise mutuelle et leur denture comprenant des dents périphériques engrenées les unes dans les autres, l'engrènement roulant des deux roues dentées (21, 31) engrenées l'une dans l'autre s'effectuant le long d'une droite d'engrènement (C, E),
**caractérisée en ce que**

- la première roue dentée (21) menante est réalisée sous la forme d'une roue de tête ($Z_a$), dotée de dents périphériques, dont la hauteur de dent ($h_a$) correspond à un module simple (m) de leurs flancs (26) de tête de dent, y compris un jeu de tête ($c_b$), le jeu de tête ($c_b$) étant une dimension d'interstice de l'écart par rapport à la deuxième roue dentée (31) menée, appairée avec la première roue dentée (21) menante et
- la deuxième roue dentée (31) menée est réalisée sous la forme d'une roue de pied ($Z_b$), dotée de dents périphériques, dont la hauteur de dent ($h_b$) correspond à un module simple (m) de leurs flancs (36) de pied de dent, y compris un jeu de tête ($c_a$), le jeu de tête ($c_a$) étant une dimension d'interstice de l'écart par rapport à la première roue dentée (21) menante, appairée avec la deuxième roue dentée (31) menée et
- un premier engrènement des dents des flancs (26) de tête de dent des dents périphériques de la première roue dentée (21) menante avec les flancs (36) de pied de dents des dents périphériques de la deuxième roue dentée (31) menée, appairée avec celle-ci lors du roulement le long de la droite d'engrènement (C, E) s'effectuant au plus tôt dans un point de roulement (C), de telle sorte que
- lorsqu'elle est en service, la transmission par engrenage (20) constitue une denture à traction à frottement de glissement (39) exclusivement tractif.

**2.** Transmission par engrenage (20) selon la revendication 1, **caractérisée en ce qu'**un premier engrènement des dents des flancs (26) de tête de dent de la première roue dentée (21) menante avec les flancs (36) de pied de dent de la deuxième roue dentée (31) menée, appairée avec celle-ci s'effectue directement en aval du point de roulement (C).

**3.** Transmission par engrenage (20) selon la revendication 1 ou 2, **caractérisée en ce que** les dents périphériques de la première roue dentée (21) menante, considérée dans la direction de son axe de rotation ($0_a$) et/ou les dents périphériques de la deuxième roue dentée (31) menée, considérée dans la direction de son axe de rotation ($0_b$) sont formées de manière symétrique.

**4.** Transmission par engrenage (20) selon l'une quelconque des revendications 1 à 3, **caractérisée en ce que** la première roue dentée (21) menante est conçue sous la forme d'une roue de tête ($Z_a$), de telle sorte que les développantes de cercle déterminantes pour la conformation des flancs (26) de tête de dent soient placées conformément à une fonction involute de la denture à développante sur le cercle de base (22) de la première roue dentée (21) menante, le point médian du cercle de base (22) se situant au centre de l'axe de rotation ($0_a$) de la première roue dentée (21) menante et son rayon ($r_{ga}$) de cercle de base étant dimensionné en tant que différence entre le rayon ($r_{aa}$) du cercle de tête et le double module (m), selon l'équation : $r_{ga} = r_{aa} - 2m$.

**5.** Transmission par engrenage (20) selon l'une quelconque des revendications 1 à 4, **caractérisée en ce que** la première roue dentée (21) menante est conçue sous la forme d'une roue de tête ($Z_a$), la forme (26) de ses flancs de dent correspondant à la partie de tête d'une roue dentée nulle (2) située au-dessus du cercle primitif (4), sans déport de profil de la denture à développante (1).

**6.** Transmission par engrenage (20) selon l'une quelconque des revendications 1 à 5, **caractérisée en ce que** la deuxième roue dentée (31) menée est conçue sous la forme d'une roue de pied ($Z_b$), de telle sorte que les développantes de cercle déterminantes pour la conformation des flancs (36) de pied de dent soient placées conformément à la fonction involute de la denture à développante jusqu'au cercle primitif (33) avec le rayon ($r_b$) de cercle primitif de la deuxième roue dentée (31) menée, d'où les développantes de cercle débouchent dans des arrondis de tête de cercle du cercle de tête (34) avec un rayon ($r_{ab}$) de tête de cercle de la deuxième roue dentée (31) menée.

7. Transmission par engrenage (20) selon l'une quelconque des revendications 1 à 6, **caractérisée en ce que** la deuxième roue dentée (31) menée est conçue sous la forme d'une roue de pied ($Z_b$), la forme (36) de ses flancs de dent correspondant à la partie de pied d'une roue dentée nulle (10), située au-dessous du cercle primitif (12), sans déport de profil de la denture à développante (1).

8. Transmission par engrenage (20) selon la revendication 6, **caractérisée en ce que** la deuxième roue dentée (31) menée comporte un cercle primitif (33) avec un rayon ($r_b$) de cercle primitif qui correspond à son cercle de tête (34) avec le rayon ($r_{ab}$) du cercle de tête.

9. Transmission par engrenage (20) selon l'une quelconque des revendications 1 à 8, **caractérisée en ce qu'**une épaisseur de dent ($s_{ga}$) de la première roue dentée (21) menante sur son cercle primitif (23) est inférieure à une épaisseur de dent ($s_{g1}$) comparable d'une roue dentée (2) menante avec une denture à développante (1), et/ou une épaisseur de dent ($s_{gb}$) de la roue dentée (31) menée sur son cercle de base (32) est inférieure à une épaisseur de dent ($s_2$) comparable d'une roue dentée (10) menante, avec une denture à développante (1).

10. Transmission par engrenage (20) selon l'une quelconque des revendications 1 à 9, **caractérisée en ce que** la première roue dentée (21) menante, ainsi que la deuxième roue dentée (31) menée comportent chacune une denture droite.

11. Transmission par engrenage (20) selon l'une quelconque des revendications 1 à 9, **caractérisée en ce que** la première roue dentée (21) menante, ainsi que la deuxième roue dentée (31) menée comportent chacune une denture hélicoïdale.

12. Transmission par engrenage (20) selon l'une quelconque des revendications 1 à 11, **caractérisée en ce que** la première roue dentée (21) menante, ainsi que la deuxième roue dentée (31) menée sont fabriquées dans une matière renforcée par fibre, de préférence dans une matière plastique renforcée par fibres de verres, de manière particulièrement préférentielle dans une matière plastique renforcée par fibres de carbone.

13. Transmission par engrenage (20) selon la revendication 12, **caractérisée en ce que** la transmission par engrenage (20) fonctionne sans lubrifiant.

14. Transmission par engrenage (20) selon l'une quelconque des revendications 1 à 13, comprenant au moins un premier appairage de roues dentées ($Z_{a1}$, $Z_{b1}$), ainsi qu'un deuxième appairage de roues dentées ($Z_{a2}$, $Z_{b2}$), chacun des au moins deux appairages de roues dentées comprenant une première roue dentée (21) menante, qui est réalisée sous la forme d'une roue de tête ($Z_{a1}$, $Z_{a2}$), ainsi qu'une deuxième roue dentée (31), menée, qui est réalisée sous la forme d'une roue de pied ($Z_{b1}$, $Z_{b2}$),
**caractérisée en ce que**
sur un premier arbre de rotation ($W_1$), ainsi que sur un deuxième arbre de rotation ($W_2$) sont fixées respectivement côte à côte en alternance au moins une première roue dentée (21), réalisée sous la forme d'une roue de tête ($Z_{a1}$, $Z_{a2}$), ainsi qu'une deuxième roue dentée (31), réalisée sous la forme d'une roue de pied ($Z_{b1}$, $Z_{b2}$), le premier arbre de rotation ($W_1$) et le deuxième arbre de rotation ($W_2$) étant positionnés de telle sorte que chaque fois en sens opposé, une roue de tête ($Z_{a1}$, $Z_{a2}$) sur un arbre de rotation ($W_1$, $W_2$) soit engrenée avec une roue de pied ($Z_{b1}$, $Z_{b2}$) en tant que roue dentée conjuguée sur l'arbre arbre de rotation ($W_2$, $W_1$) opposé et forme un appairage de roues dentées.

15. Transmission par engrenage (20) selon la revendication 14, **caractérisée en ce que** les roues dentées (21, 31) placées chaque fois côte à côte sur un arbre de rotation ($W_1$, $W_2$), qui sont réalisées alternativement sous la forme d'une roue de tête ($Z_{a1}$, $Z_{a2}$) et sous la forme d'une roue de pied ($Z_{b1}$, $Z_{b2}$) sont fixement reliées l'une avec l'autre avec un déport mutuel, sous un angle de rotation définissant le jeu de flanc.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 102018218888 A1
- DE 970027 C
- CN 105134910 B
- CH 362274 A